# EUROPEAN PATENT APPLICATION

(11) **EP 1 602 293 A1**
(43) Date of publication of application: **07.12.2005**
(21) Application number: 05253290.0
(22) Date of filing: 27.05.2005
(51) Int. Cl.: A43B 3/24

(54) **Footwear design and marketing method**

(30) Priority: 01.06.2004 US 858237
(71) Applicant: Wolverine World Wide, Inc., Rockford, Michigan 49351 (US)
(72) Inventor: Willis, Charles C., North Somerset, BS24 9US (GB)
(74) Representative: Roberts, Gwilym Vaughan

(57) **Abstract**

A method for designing a line of products across different functional categories. The method includes the steps of selecting certain performance components and grading the components from one product to the next to tailor the product to the appropriate functional category. At the same time, the products include common, yet varied, design elements that interrelate the products and create a morphing or evolving appearance from one functional category to the next. The present invention further discloses a method for marketing footwear across different functional categories as a line of products by providing the products with evolving or morphing functional and design components.

## Description

### BACKGROUND OF THE INVENTION

The present invention relates to footwear and more particularly to a method for the design and marketing of footwear.

Footwear companies typically offer a variety of different footwear products. These products may be intended for use the same or different functional categories (e.g. light sport, trail running, day hiking, hiking, backpacking and mountaineering). Using conventional design methods, different footwear models are designed and sold as separate products. This is particularly so in applications where the products are intended for use in different functional categories. For example, if a manufacturer intends to sell products in the functional categories of sandals, running shoes, hiking boots and backpacking boots, the various products are separately designed and marketed in their corresponding niches. This conventional approach to design and marketing requires separate "ground-up" design efforts for each product and also requires separate marketing efforts.

In some conventional applications, a manufacturer may incorporate a new performance technology into products in different functional categories. For example, a footwear manufacturer may develop an internal cushioning technology and incorporate a single embodiment of that technology into both court shoes and running shoes. Although this may reduce overall design costs because a separate internal cushioning technology does not need to be designed for each different product, it does not address footwear design in a holistic manner. Instead, the use of a single technology across multiple functional categories often leads to compromises in performance and/or comfort because a single embodiment of the technology is not optimal for all functional categories.

### SUMMARY OF THE INVENTION

The aforementioned problems are overcome by the present invention which provides footwear design and marketing methods for a line of products including footwear in multiple functional categories. More specifically, the design method includes a process for designing a line of footwear products across different functional categories using a structured approach for evolving or morphing the performance and aesthetic characteristics across the products and the functional categories.

In one embodiment, the method sets forth a number of specific performance components that may be varied from one functional category to the next. In this embodiment, the method includes the steps of selecting and varying a number of these performance components to evolve a product from one functional category to the next. The design method may further include the step of retaining select aesthetic or design components, or variations thereof, to provide a common, yet evolving, aesthetic appearance throughout the line of products. The design is preferably morphed or evolved along with the performance components to provide a visual indication of the performance grade of the corresponding products. This not only provides a connection between the products that facilitates marketing of a complete product line, but also eliminates the need to design each product from scratch.

In one embodiment, the present invention provides a line of footwear products across at least three different functional categories, with each product having similar, but varied, performance components, such as outsole configuration, midsole configuration, sole stabilizer configuration, insole configuration, footbed configuration, upper configuration, upper support components and lacing system. The characteristics of each performance component that evolve may vary, but include such things as outsole lug configuration, lug depth, outsole material selection and hardness, midsole hardness, size shape and location of sole stabilizer, upper configuration, upper material selection, upper support components, footbed construction and closure system.

The present invention also provides a method for marketing a line of footwear products across different performance categories by providing them with related, yet evolving, aesthetic and functional elements. The evolution of performance and aesthetic characteristics provides commonality in aesthetic appearance across the line of products, while also providing a graded or evolving level of technical performance, thereby making each product uniquely suited for its intended functional category.

The present invention provides a unique design and marketing methodology that simplifies the design and development of products across different functional categories while at the same time providing a line of products that can be marketed as an interrelated set. The design method of the present invention provides a methodology that facilities the design of products across different functional categories by providing a structured approach for evolving the performance characteristics of a series of product components. The present invention also provides an evolving or morphing connection between products designed for different functional categories. This provides not only a visual link between the products in a given line, but also provides visual indications of the performance grade of the products. The present invention further provides a marketing method for marketing a line of products across different functional categories. The evolving, interrelated nature of the products provides motivation for consumers to purchase a line or family of products. This, in turn, provides incentive for a retailer to sell the full line of products. As a result, the present invention enhances the product offerings available to consumers and improves the marketability of products.

These and other objects, advantages, and features of the invention will be readily understood and appreciated by reference to the detailed description of the preferred embodiment and the drawings.

### BRIEF DESCRIPTION OF THE DRAWINGS

Fig. 1a is a side elevational view of a first line of products manufactured in accordance with an embodiment of the present invention.
Fig. 1b is a side elevational view of a second line of products.
Fig. 1c is a side elevational view of a third line of products.
Fig. 1d is a side elevational view of a fourth line of products.
Fig. 2a is an exploded perspective view of a sport sandal in a first line of products.
Fig. 2b is a bottom plan view of the outsole of the sport sandal.
Fig. 3a is an exploded perspective view of a multisport shoe in a first line of products.
Fig. 3b is a bottom plan view of the outsole of the multisport shoe.
Fig. 4a is an exploded perspective view of a day hiking shoe in a first line of products.
Fig. 4b is a bottom plan view of the outsole of the day hiking shoe.
Fig. 5a is an exploded perspective view of a hiking boot in a first line of products.
Fig. 5b is a bottom plan view of the outsole of the hiking boot.
Fig. 6a is an exploded perspective view of a backpacking boot in a first line of products.
Fig. 6b is a bottom plan view of the outsole of the backpacking boot.
Fig. 7a is an exploded perspective view of a mountaineering boot in a first line of products.
Fig. 7b is a bottom plan view of the outsole of the mountaineering boot.
Fig. 8a is an exploded perspective view of a light sport sandal in a second line of products.
Fig. 8b is a bottom plan view of the outsole of the light sport sandal.
Fig. 9a is an exploded perspective view of a multisport sandal in a second line of products.
Fig. 9b is a bottom plan view of the outsole of the multisport sandal.
Fig. 10a is an exploded perspective view of a shandal in a second line of products.
Fig. 10b is a bottom plan view of the outsole of the shandal.
Fig. 11 a is an exploded perspective view of a light trail running shoe in a second line of products.
Fig. 11b is a bottom plan view of the outsole of the light trail running shoe.
Fig. 12a is an exploded perspective view of a trail running shoe in a second line of products.
Fig. 12b is a bottom plan view of the outsole of the trail running shoe.
Fig. 13a is an exploded perspective view of a high performance trail running shoe in a second line of products.
Fig. 13b is a bottom plan view of the outsole of the high performance trail running shoe.
Fig. 14a is an exploded perspective view of a thong sport sandal in a third line of products.
Fig. 14b is a bottom plan view of the outsole of the thong sandal.
Fig. 15 is an exploded perspective view of a slide sandal in a third line of products.
Fig. 16a is an exploded perspective view of a convertible sandal in a third line of products.
Fig. 16b is a bottom plan view of the outsole of the convertible sandal.
Fig. 17 is an exploded perspective view of a multisport sandal in a third line of products.
Fig. 18a is an exploded perspective view of a ventilated trail running shoe in a third line of products.
Fig. 18b is a bottom plan view of the outsole of the ventilated trail running shoe.
Fig. 19a is an exploded perspective view of a ventilated day hiking shoe in a third line of products.
Fig. 19b is a bottom plan view of the outsole of the ventilated day hiking shoe.
Fig. 20 is an exploded perspective view of a leather trail running shoe in a third line of products.
Fig. 21 is an exploded perspective view of a waterproof day hiking shoe in a third line of products.
Fig. 22a is an exploded perspective view of a water sock in a fourth line of products.
Fig. 22b is a bottom plan view of the outsole of the water sock.
Fig. 23a is an exploded perspective view of a water moc in a fourth line of products.
Fig. 23b is a bottom plan view of the outsole of the water moc.
Fig. 24 is an exploded perspective view of a multisport water shoe in a fourth line of products.
Fig. 25a is an exploded perspective view of a high performance water shoe in a fourth line of products.
Fig. 25b is a bottom plan view of the outsole of the high performance water shoe.

### DETAILED DESCRIPTION OF THE PREFERRED EMBODIMENT

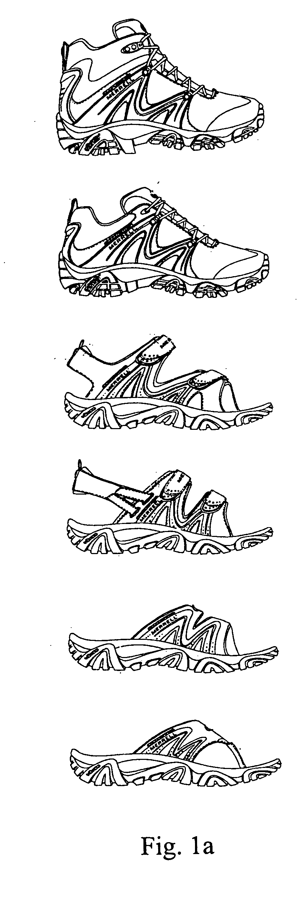

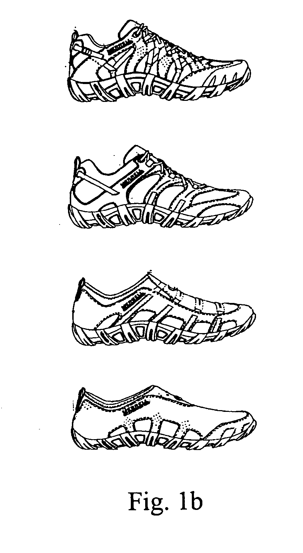

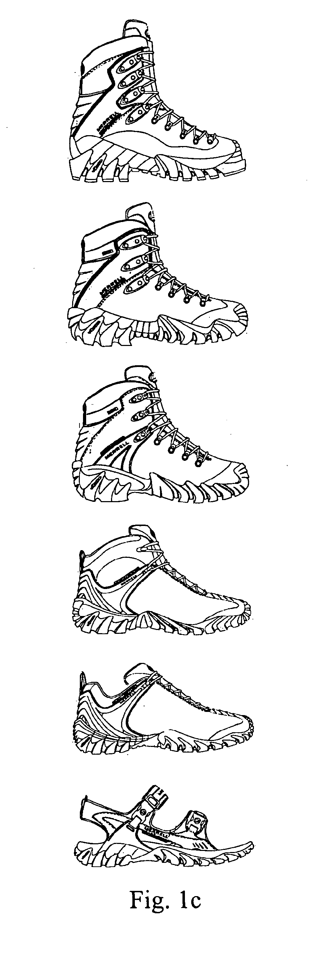

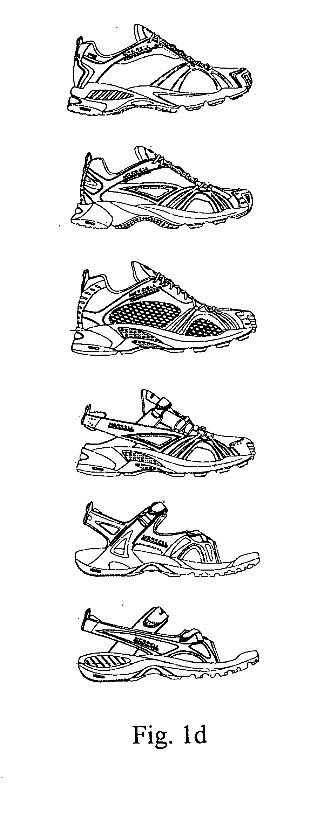

The present invention provides a method for designing a line of products that includes products in different functional categories. The method includes the step of evolving a plurality of performance components to tailor each product to the intended functional category, while at the same time retaining distinctly interrelated design elements that provide the products with an evolving or morphing visual appearance. Figs. 1a-d are illustrations of various lines of products designed and manufactured in accordance with an embodiment of the present invention. As can be seen, the products include a clear visual morphing or evolution from one product to the next. In one embodiment, the performance components include may be varied to adjust performance criteria, such as stability, traction, fit, comfort and climate. In general, the stability of a product can be varied by adjusting the characteristics of sole, upper and closure system of the product. This may include the introduction of additional support components, such as rigid sole plates and molded upper components. The traction of a product can be varied primarily by adjusting the characteristics of the outsole, such as varying tread patterns (depth, engineering and geometry), compound formulations, compound combinations and flexibility. The fit of a product can be varied primarily by adjusting the characteristics of the upper and closure system, for example, by varying the upper configuration and materials or by varying the lacing hardware. The comfort of a product can be varied primarily by adjusting the configuration, materials and other characteristics of the sole, upper and closure system. The climate of a product can be varied primarily by adjusting the characteristics of the upper, for example, by providing ventilating upper components, waterproof membranes and insulating lining. The design criteria of the products extends through visible elements of the sole, upper and closure system, and therefore can be adjusted in essentially any visible elements of the products. The design criteria for a given line or products are selected to provide an evolving or morphing appearance to the products as they move from one functional category to another. The morphing appearance is intended to provide a visual indication of the performance level of a particular product relative to the other products in the line. For example, the design characteristics may grow in size or aggressiveness to provide a visual indication of a growth in the performance level between two products.

A variety of performance components can be varied to provide an evolving product with technically accurate performance characteristics for each functional category. For purposes of disclosure, and not limitation, the variation in a number of specific performance components is described herein. It is within the scope of this invention to evolve the characteristics of other performance components. The characteristics of the outsole may be varied to provide the desired performance for the select functional category. For example, the material selection for the outsole may be varied. More durable and wear resistant materials may be used in some applications, while softer, more resilient materials may be used in other application. It may also be desirable to construct different portions of the outsole from different materials. For example, central lugs may be manufactured of softer materials to provide improved traction, while outer lugs may be manufactured of harder materials to provide improved durability and extend the life of the outsole. The design and layout of the tread elements may also be varied to provide different performance characteristics. In one application, the lug depth may be increased to provide improved traction in select activity. Further, the lug shape may be made more or less aggressive. For example, the angle of a lug may be increased or decreased between functional categories or the edges of a lug may be rounded or squared. The outsole may also include a heel in heavier functional categories, such as hiking and mountaineering. The heel provides improved stability and support for the heel of the wearer's foot, but increases the weight of the outsole.

The performance of the article of footwear may also be varied by providing the sole with a support plate. The support plate may vary in size, shape, configuration and materials to provide differing levels of support to the sole. If included, the support plate may be extend throughout different portions of the sole or may include different rigidity characteristics. In some applications, the support plate may be a simple shank located only in the arch region and in others the support plate may extend from one end of the sole to the other. The sole plate may be contoured to increase its rigidity in certain directions or may define cutouts to provide more flexibility in select regions.

The sole may also include a heel counter. The heel counter may be external, such that it is visible from the exterior of the shoe, or it may be internal where it provides support without being visible to consumers. The heel counter may vary in size, shape, configuration and materials to provide differing levels of support. In some applications the heel counter may be integral with a support plate.

The characteristics of the footwear product may be tuned by varying the characteristics of the midsole to provide the desired cushioning properties. The midsole may vary in size, shape, configuration and materials to provide differing levels of support to the sole. For example, the midsole may be EVA or PU of different densities. The midsole may be thicker in the heel region and thinner under the ball of the foot. The midsole may include different portions manufactured from different materials, for example, regions of firmer material may disposed along opposite sides of the midsole or in the heel region. The midsole may also include a heel cushion to provide, among other things, enhanced cushioning and improved centering of the heel on the sole. The characteristics of the heel cushion may vary and it may be mounted in a void formed in the top or bottom of the midsole.

The performance characteristics of a product may be varied by providing an upper of different styles and by manufactured the upper from a variety of different materials. The upper may also be provided with any of a number of support components. The style of the upper may evolve from one functional category to the next. For example, the upper style may evolve from a thong sandal for light use, to a slide sandal for light use to minimal sporting activities, to a convertible sandal for light to medium sporting activities and to a multi-sport sandal for a range of sporting activity. In further evolutions, the upper may be a shandal upper, which is a hybrid sandal/shoe upper (i.e. a closed front end and a strap to form the heel, a low-cut shoe upper, a mid-height shoe upper, a boot upper (of differing collar heights). The upper may include different height ankle collars. In one application, the footwear products may include a low collar for the lightest performance category, a mid-height collar for mid-performance products and a full boot collar for the highest performance products. The upper materials may also vary from lighter to heavier performance categories. Ventilated (or perforated) materials, such as mesh and open weave textiles, may be used in functional categories where reduced weight and improved comfort are key characteristics of the footwear. Ventilated materials provide the upper with a high level of breathability that can be used to promote air flow and water flow in water applications. Woven materials and other fabrics or textiles (natural or synthetic) can be used in other applications. The upper may alternatively be manufactured of leather or synthetic leather materials. The performance characteristics of the upper may be varied by using leathers or synthetic leather materials of differing properties. For example, the style, grade and thickness of the leather can be varied to tailor the product to the desired functional category. The upper may include different materials in different regions, for example, ventilated material may be used in one region while leather is used in another. The lining materials of the upper materials may also be varied to match the climate associated with the intended functional category. The upper may include a waterproof membrane or a waterproof/breathable lining, such as GoreTex®, in functional categories where protection from a wet environment is desired. The upper may include a lining of an insulating material, such as Thinsulate®, in functional categories where heat retention is desired. The upper may also include padding, such as open and closed cell foams, and other conventional cloth linings when appropriate. The upper may be provided with support components to bolster the upper in specific regions, such as a molded saddle in the forefoot and/or arch region of the shoe, a molded ankle support in the ankle region or a molded heel support in the heel region.

The lacing system may also vary to provide the desired balance between cost, weight, ease of use and durability in each functional category. For example, the lacing system may include eyelets, webbing (to define lacing loops), lacing rings, lacing hooks, lacing rollers and double hooks. The materials of the various closure elements may also vary. For example, the webbing material may increase in strength and durability, the lacing rings may vary in materials from plastic to various metals. The mechanism for securing the lacing hardware to the upper may also change, for example, the lacing hardware may be sewn, single riveted or double riveted to the upper. The lacing system may include a standard flat lace, an oval lace or a round lace, and may include different materials to provide the desired strength and durability.

The footbed may also be varied to provide performance tailored for specific functional categories. The footbed will typically include a lining material secured to the upper surface of a cushioning material. The lining material may be selected to provide the desired properties. For example, the lining may be manufactured from a wicking material that draws sweat away from the foot or may be manufactured from an open weave fabric that permit air/water to pass relatively easily through the lining. The properties of the cushioning materials can be varied to provide different levels of support. For example, harder materials can be used where enhanced support is desired or a perforated footbed can be include in products where enhanced air flow and water flow through the product is desired. The cushioning material may also include materials of different cushioning properties in different regions.

In some applications, it may also be desirable to provide the products within a product line with distinct color patterns. This will help to provide color variety within the product line. It may also be desirable to sell an entire product line in multiple colorways to provide the consumer with additional color options. For example, a product line may include a men's colorway, a women's colorway and one or more unisex colorways.

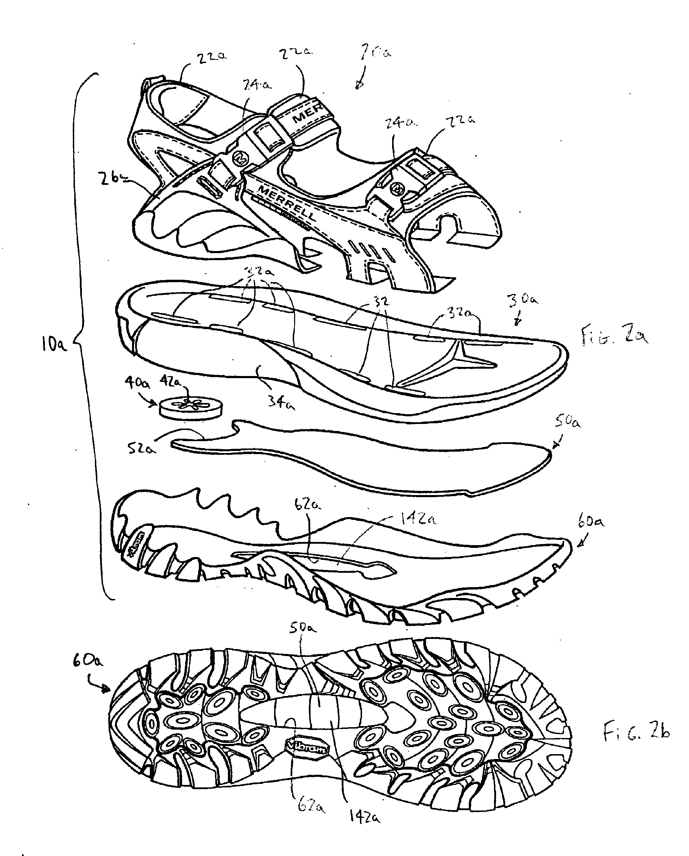

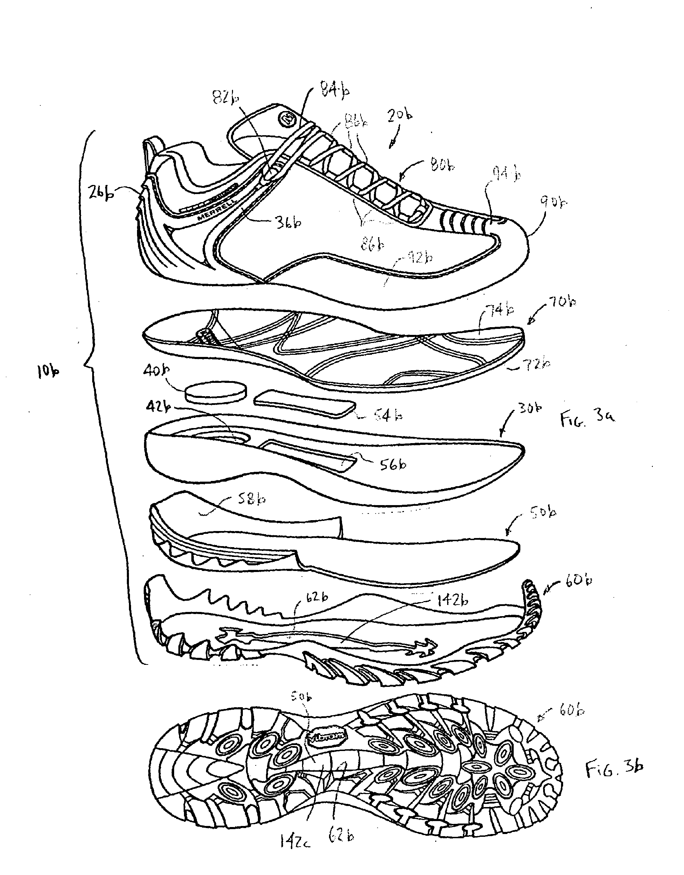

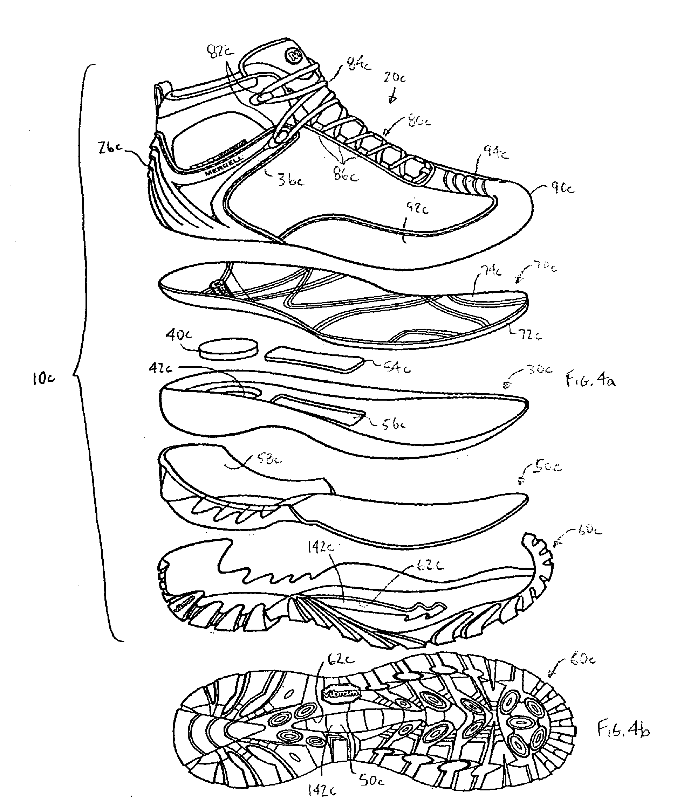

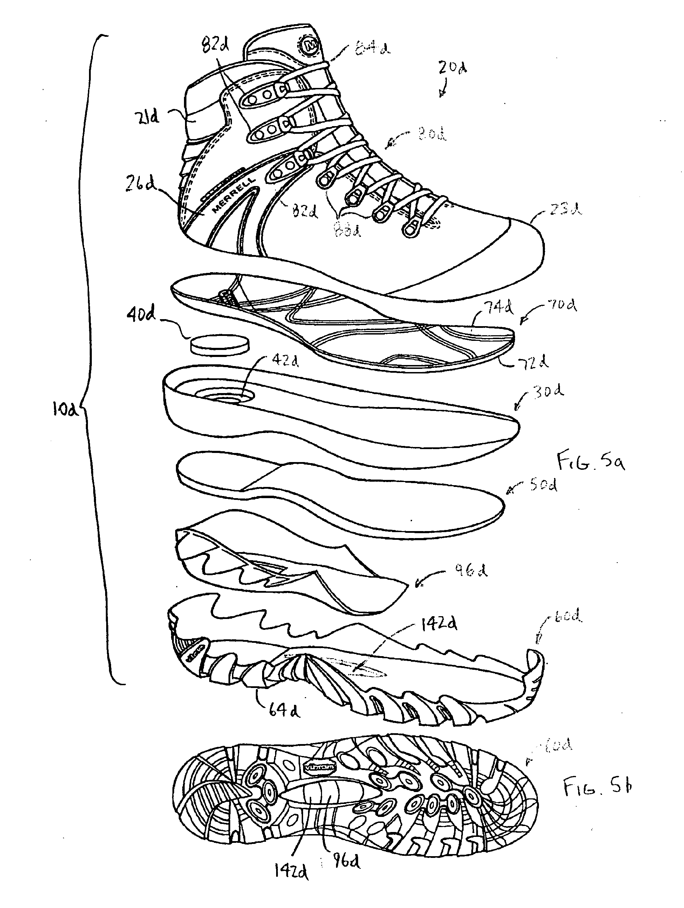

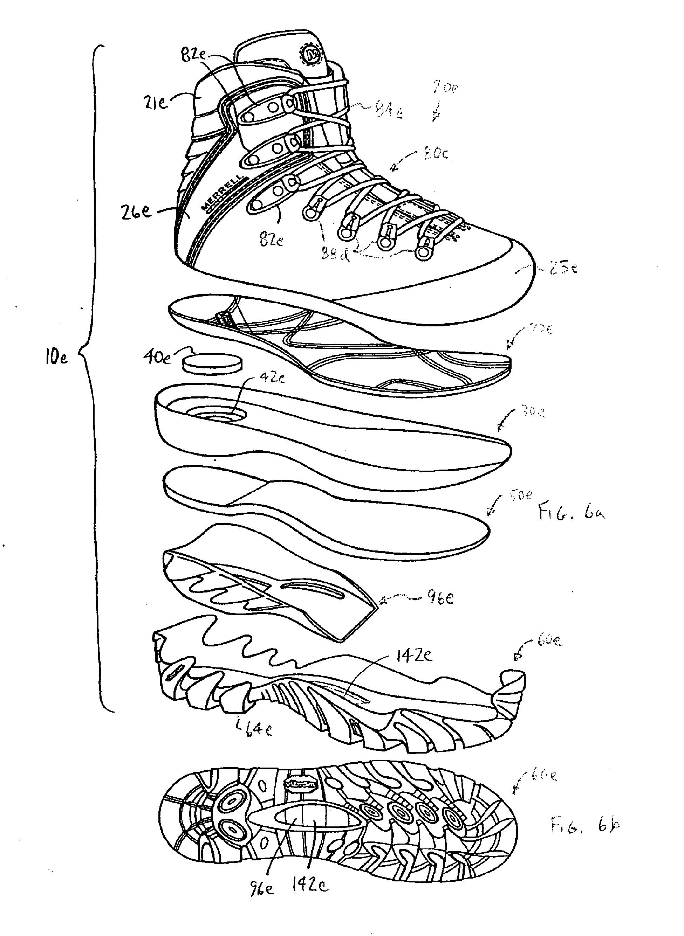

The present invention will now be described in connection with a number of exemplary product lines. The various product lines are provided to illustrate the application of the design method, but are not intended to limit the scope or content of the method. Although the specific functional categories may vary from application to application, the functional categories in the family of products shown in Figs. 2-7 include a sport sandal (See Fig. 2a), a multisport shoe (See Fig. 3a), a day hiking boot (See Fig. 4a), a hiking boot (See Fig. 5a), a backpacking boot (See Fig. 6a) and a mountaineering boot (See Fig. 7a). This line of products is intended for use in outdoor activities. These products are intended primarily for use in dry environments, but may be varied for use in wet environments by incorporating waterproof upper materials and/or waterproof linings or membranes, such as Gore-Tex®. The sport sandal 10a is intended for use in the sport sandal functional category. In this embodiment, the sport sandal generally includes an upper 20a, a midsole 30a, a heel cushion 40a, a support plate 50a and an outsole 60a (Fig. 2a). The upper 20a is designed to provide a relatively high level of support for a sandal 10a and therefore permits use of the sandal 10a in various sporting activities. The sandal upper 20a includes straps 22a configured to overlay the forefoot, ankle and heel of the wearer's foot. The straps 22a may be manufactured from synthetic leather, leather or other conventional materials suitable for general sport activity. The straps 22a over the forefoot and ankle regions are adjustable in length and are releasable secured by conventional hardware, such as plastic clips 24a. The upper also includes a pair of ankle support components 26a disposed on opposite sides of the ankle region. Although only one ankle support component 26a is shown in Fig. 2a, a mirror image of the illustrated ankle support component 26a is disposed on the opposite side of the sandal 10a. The ankle support components 26a may be manufactured from a polymeric material, such as TPU, that enhances the stability of the upper 20a in the ankle region, thereby improving the performance of the sandal 10a in sport activity. The ankle supports 26a may be stitched or otherwise secured to the upper 20a. The upper 20a may also include conventional lining materials, such as neoprene, Lycra or the like. The lining materials (not shown) are selected to be suitable for sport activities. In this embodiment, the support plate 50a extends over only a portion of the sole―beginning at or near the toe of the sole and extending rearwardly through the arch region and terminating at or near the front of the heel region. The rear end 52a of the support plate 50a may be arcuate to permit proper operation of the heel cushion 40a (described below). The support plate 50a may be manufactured from nylon or other similar materials and preferably has Grade 2 rigidity. The midsole 30a is the primary cushioning element for the sandal 10a. The midsole 30a is generally conventional in construction and may be manufactured from EVA or other similar cushioning materials. The midsole 30a may be manufactured from a single material or may include materials of different properties in different regions. In this embodiment, the midsole 30a defines a plurality of die cut holes 32a to receive the upper 20a. The straps 22a extend down through the die cut holes 32a and are cemented or otherwise secured to the undersurface of the midsole 30a in a conventional manner. The midsole 30a may also include shallow recesses 34a in the ankle region that receive the ankle support components 26a. The ankle support components 26a are cemented into these recesses 34a and to the undersurface of the midsole 30a. The midsole may also include a heel cushion 40a. The heel cushion 40a is disposed in a circular recess 42a (shown only in broken line) defined in the undersurface of the midsole 30a. The heel cushion 42a is manufactured from EVA or other similar cushioning materials and may define a central star-shaped cutout 44a. The heel cushion 40a provides enhanced cushioning beneath the heel and helps to center the heel of the wearer's foot in the heel pocket. The outsole 60a of the sport sandal 10a is shown in Fig. 2b and is cemented or otherwise secured to the undersurface of the midsole 30a and support plate 50a. The outsole 60a may be manufactured from rubber or other similar outsole materials. The outsole 60a may define a central opening 62a filled with a transparent material 142a that permits viewing of the undersurface of the support plate. If desired, the support plate may include special design elements that provide the desired aesthetic appearance.

The multisport shoe 10b of Fig. 3a is intended for use in the multisport functional category, and may be used for a variety of sporting applications, such as trail walking, biking and skateboarding. The multisport shoe 10b generally includes an upper 20b, a footbed 70b, an internal midsole 30b, a support plate 50b and an outsole 60b. The upper 20b is manufactured primarily from fabric. The upper 20b includes a peripheral marginal portion or allowance (not shown) that wraps beneath and is cemented or otherwise secured to the undersurface of the midsole. The upper 20b further includes an ankle/heel support 26b that wraps around the heel of the shoe 10b and includes fingers 36b that extend forward across the ankle region. The support 26b may be stitched or otherwise secured to the upper 20b. The ankle/heel support 26b is manufactured from a polymeric material, such as TPU, or other similar materials. A lacing hook 82b is disposed on the end of each finger 36b to integrate the ankle/heel support 26b into the lacing system 80b. This permits the ankle support 26b to be drawn snuggly around the ankle when the lace 84b is tightened. The upper 20b includes a lacing system 80b having a plurality of lacing loops 86b and a generally conventional egg-shaped lace 84b having two synthetic cores. The upper 20b also includes a toe piece 90b that extends around the toe of the shoe 10b with side fingers 92b that extend readwardly along opposite sides of shoe 10b and a central finger 94b that extends rearwardly to the base of the tongue opening 28b. The central finger 94b may include a series of angled ribs that provide a distinct visual appearance. The toe piece 90b is preferably molded from TPU or other similar materials and is stitched, cemented or otherwise secured to the upper 20b. The footbed 70b is generally conventional and may be dropped into the upper 20b once manufacture of the remainder of the shoe is complete. The footbed 70b may include a narrow layer of cushioning material 72b with a fabric lining 74b on its top surface. As with the sport sandal 10a, the midsole 30b functions as the primary cushion for the shoe 10b. The midsole 30b is internal to the upper and may be manufactured from EVA or other similar cushioning materials. The midsole 30b may be manufactured from a single material or may include materials of different properties in different regions. In this embodiment, the midsole 30b defines a shank recess 56b and heel cushion recess 42b in its upper surface. The shank recess 56b is disposed in arch region of the midsole 30b to receive a shank 54b that provides the desired stability to the arch of the wearer's foot. The properties of the shank 54b may vary from one application to another. The heel cushion recess 42b is disposed in the center of the heel region of the sole to receive a heel cushion 40b. The shank 54b and heel cushion 40b may be cemented or otherwise secured to the midsole 30b. The support plate 50b is disposed external to the upper and is cemented or otherwise secured to the undersurface of the midsole 30b and upper allowance. In this embodiment, the support plate 50b extends from toe to heel and includes an integral external heel counter 58b that extends upwardly along the outside of the shoe 10b in the heel region. The external heel counter 58b provides enhanced support in the heel region. The support plate 50b may be manufactured from nylon or other similar materials and preferably has a flexibility of Grade 2. The outsole 60b is shown in Fig. 3b and is cemented or otherwise secured to the undersurface of the support plate 50b. The outsole 60b may be manufactured from rubber or other similar outsole materials. As with the outsole of the sport sandal, the outsole may define a central opening 62b filled with a transparent material 142b that permits viewing of the undersurface of the support plate 50b. If desired, the support plate 50b may include special design elements that provide the desired aesthetic appearance and visually link the multisport shoe 10b to the sport sandal 10a. As shown, the design and configuration of the tread elements of the outsole 60b of the multisport shoe 10b are visually similar, but not identical to, the outsole 60a of the sport sandal 10a. The tread elements are configured to provide the appearance of a morphing evolution from one outsole 60a to the next outsole 60b. The visual similarity also exists in the profile of the two outsoles 60a and 60b, thereby providing a further design connection between the products 10a and 10b.

The day hiking shoe of Fig. 4a is intended for use in the light hiking category. The day hiking shoe 10c generally includes an upper 20c, a footbed 70c, internal midsole 30c, support plate 50c and outsole 60c, and except as described below is essentially identical to the multisport shoe 10b. The day hiking shoe 10c includes a mid-height upper 20c that provides enhanced ankle support over the low cut upper 20b of the multisport shoe 10b. The upper 20c is manufactured primarily from fabric. The mid-height upper 20c includes an additional lacing hook 82c at the top of the ankle collar 21. The support plate 50c is stiffer than the support plate 50b of the multisport shoe 10b (e.g. Grade 4 rather than Grade 2 stiffness) and includes a heavier integrated heel counter 58c. The heel counter 58c extends higher on the midsole 30c providing additional support in the heel region. The outsole 60c is shown in Fig. 4b. As with other products in this line, the outsole 60c may define a central opening 62c filled with a transparent material 142c that permits viewing of the undersurface of the support plate 50c. If desired, the support plate 50c may include special design elements that visually link the day hiking shoe 10c to the multisport shoe 10b and the sport sandal 10a. It can also be seen that the design and configuration of the tread elements of the outsole 60c are visually similar, but not identical to, the outsole 60b of the multisport shoe 10b. For example, the outsole 60c of the day hiking shoe 10c includes a defined heel 64c and its lug depth is increased. The outsole 60c wraps farther up the midsole 30c than the outsole 60b of the multisport shoe 10b. The visual similarity between the outsoles 60a, 60b and 60c of this line of products exists in the profile as well, again showing an evolution or morphing from the multisport shoe 10b into the higher performance day hiking shoe 10c.

The hiking boot of Fig. 5a is intended for use in the hiking category. The hiking boot 10d generally includes an upper 20d, a footbed 70d, an internal midsole 30d, a support plate 50d, a heel counter 96d and an outsole 60d. The upper 20d of the hiking boot 10d is designed to provide the support required in hiking. The upper 20d includes a relatively high collar extending fully above the ankle. In this embodiment, the upper 20d is manufactured from top grain leather with a thickness of approximately 2.2 to 2.4 millimeters. The upper 20d is lined with a waterproof/breathable Gore-Tex® liner (not shown) and may also include a soft durable fabric inner lining (not shown)―a variety of which are well known and readily available from a variety of suppliers. The hiking boot 10d may also include a more durable lacing system 80d that includes metal hardware with lacing rings 88d over the forefoot area and lacing hooks 82d along the ankle collar 21d. The lace 84d may be a round lace having 3 synthetic cores. The upper 20d includes an ankle support 26d that is stitched of otherwise secured to the upper 20d. The ankle support 26d is preferably manufactured from TPU or other similar materials. As with the multisport shoe 10b and day hiking shoe 10c, the ankle support 26d of the hiking boot 10d includes a lacing hook 82d mounted to the ends of the ankle support 26d to permit the ankle support 26d to be drawn snuggly around the ankle by the lacing system 80d. The upper 20d also includes a rubber toe guard 23d that protects the leather in the toe from scuffing. The toe guard 23d is stitched, cemented or otherwise secured to the upper 20d. The footbed 70d, midsole 30d and support plate 50d are disposed internal to the upper 20d with a peripheral marginal portion of the upper 20d being wrapped beneath and secured to the undersurface of the support plate 50d, for example, by cement. The midsole 30d may be manufactured from EVA having a greater hardness than the midsole 30c of the day hiking shoe 10c. The support plate 50d has Grade 6 stiffness providing more support than the support plate 50c of the day hiking shoe 10c. The external heel counter 96d is separate from the support plate 50d and may be manufactured from nylon, TPU or other similarly rigid materials. The heel counter 96d is cemented or otherwise secured to the upper 20d and the support plate 50d. The outsole 60d is shown in Fig. 5b and may define a central opening 62d filled with a transparent material 142d that permits viewing of the undersurface of the heel counter 96d. Although not shown, the outsole 60d may be manufactured with different materials in different portions of the outsole 60d. For example, select internal lugs or treads may be manufactured from a softer material than the peripheral lugs or treads. An outsole having a combination of materials can be integrated into any of the products described herein. If desired, the heel counter 96d may include special design elements that visually link the products in this line. The design and configuration of the tread elements of the outsole 60d are visually similar, but not identical to, those of the day hiking shoe 10c. The design variations are selected to provide the appearance of a morphing or evolution from the day hiking shoe outsole 60c to the hiking boot outsole 60d. The hiking boot outsole 60d includes a defined heel 64d and its lug depth is increased over that of the day hiking shoe 10c. The outsole 60d wraps farther up the midsole 30d than the outsole 60c of the day hiking shoe 10c and includes a profile that is a visual and functional evolution of the outsole 60c of the day hiking shoe 10c.

The backpacking boot of Fig. 6a is intended for use in the backpacking category. The backpacking boot 10e is generally identical to the hiking boot 10d except to the extent described below. The backpacking boot upper 20e includes a collar 21e that extend higher up the leg than the collar of the hiking boot 10d. The upper 20e is manufactured from top grain leather with a thickness of approximately 2.6 to 2.8 millimeters. The upper 20e includes a waterproof/breathable Gore-Tex® liner. The upper 20e includes an enclosed ankle/heel support 26e that wraps around the heel of the upper 20e and extends up into the collar 21e to provide the ankle with a high degree of stability. A pair of lacing hooks 82e is mounted to the ankle/heel support 26e so that the support can be drawn snuggly around the heel and ankle when the lace 84e is tightened. The lacing system 80e is enhanced over the lacing system 80d of the hiking boot 10d and includes lacing hardware 88e with rollers along the forefoot and double-rivet lacing hooks 82e along the ankle and collar 21e. The lace 84e may be a round lace having 3 synthetic cores and may be water repellant. The footbed 70e, midsole 30e and support plate 50e are disposed internal to the upper 20e. The footbed 70e may include thicker or stiffer cushioning material than the footbed 70d of the hiking boot 10d having, for example, 5 millimeters of cushioning material in the ball of the foot. The midsole 30e may be manufactured from PU or EVA having a higher density (increased firmness) than the midsole 30d of the day hiking shoe 10d. The support plate 50e is preferably manufactured from nylon or other similar materials and has a stiffness of Grade 8. The external heel counter 96e is an enhanced version of the heel counter 96d of the hiking boot 10d. The backpacking boot heel counter 96e extends farther up the upper 20e and may be manufactured from stiffer materials than the heel counter 96d of the hiking boot 10d. The outsole is shown in Fig. 6b and is a further evolution in the outsoles of this product line. For example, the number of lugs has decreased, but they have increased in lug depth (e.g. 8 millimeters) and geometry. The outsole 60e defines a central opening 62e filled with a transparent material 142e that permits viewing of the undersurface of the heel counter 96e. The heel counter 96e includes design elements that visually link the products in this line.

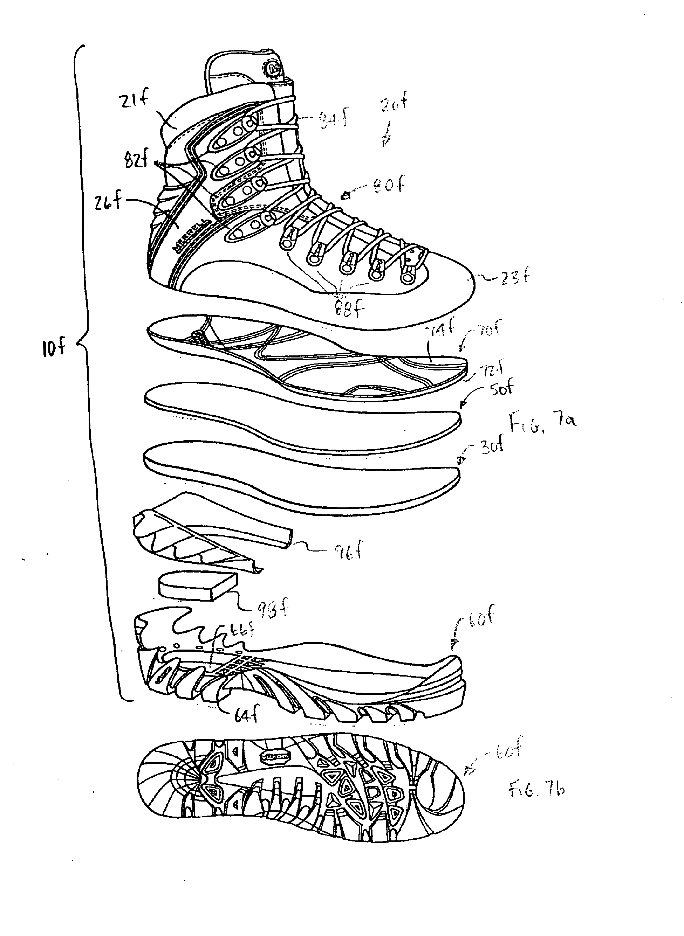

The mountaineering boot 10f of Fig. 7a is intended for use in the mountaineering category. The characteristics of the various performance components are graded to provide the highest in technical performance. The upper 20f is manufactured from an exotic leather or a top grain leather having a thickness of 3 millimeters. The upper 20f includes an ankle collar 21 f that extends even farther up the leg than that of the backpacking boot 10e. The ankle/heel support 26f is molded from TPU or other similar materials and may cover a greater portion of the upper 20f than the ankle/heel support 26e of the backpacking boot 10e. The lacing system 80f may include lacing hardware 88f with rolling elements along the forefoot and double-rivet lacing hooks 82f along the ankle and collar. Three double-rivet lacing hooks 82f may be mounted to the ankle/heel support 26f. The upper 20f may include a large rubber toe guard 23f to protect an even greater portion of the upper 20f than the toe guard 23e of the backpacking boot 10e. The footbed 70f, midsole 30f and support plate 50f are disposed internal to the upper 20f. The footbed 70f may have graded cushioning properties and preferably includes a high tech performance lining 72f that provides temperature and sweat control. The support plate 50f is preferably manufactured from carbon fiber and has a stiffness of Grade 10. The external heel counter 96f may include a generally U-shaped horizontal portion 97f that permits insertion of a cut heel piece 98f into a heel recess 66f in the outsole 60f. The external heel counter 98f is cemented or otherwise secured to the upper 20f. The outsole 60f is manufactured from rubber or other similar materials. The outsole 60f includes a raised heel 64f that defines an internal void 66f for cut heel piece 98f. The heel piece 98f is manufactured from EVA or other similar materials and may be cemented or otherwise secured in the void 66f. The tread pattern is an evolved version of the outsole 60e of the backpacking boot 10e having a similar, but exaggerated, profile that extends farther up the upper and includes more substantive toe and heel extensions (See Fig. 7b). The tread elements have greater depth (e.g. lugs ranging from 8-10 millimeters) and the central lugs have more severe angles than the rounded central lugs of the backpacking boot 10e.

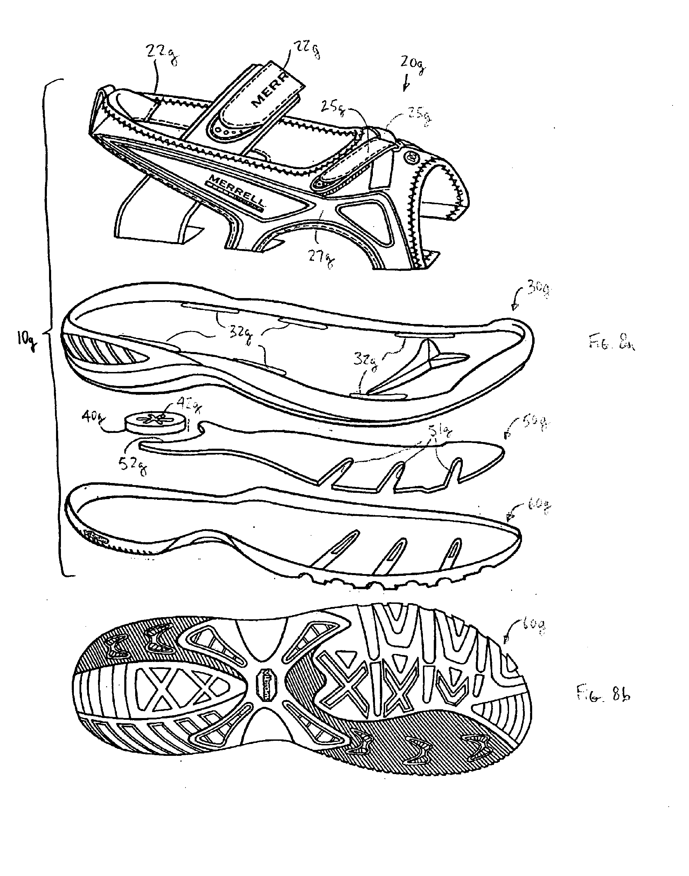

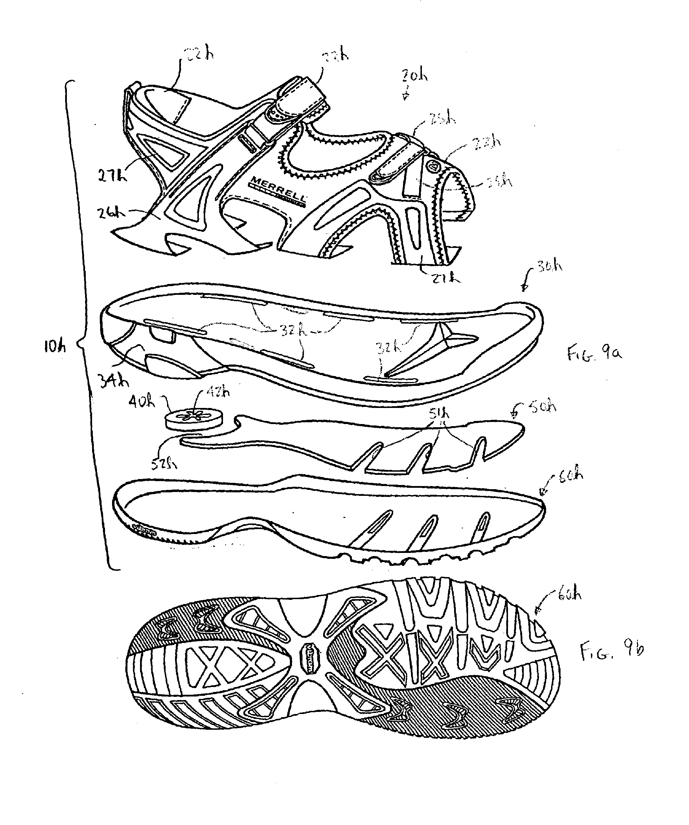

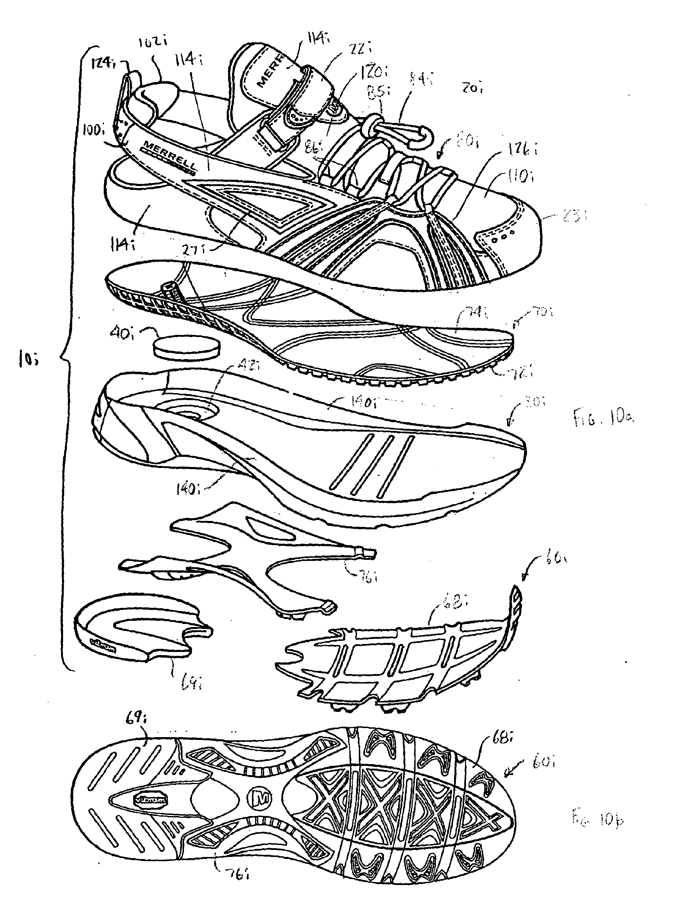

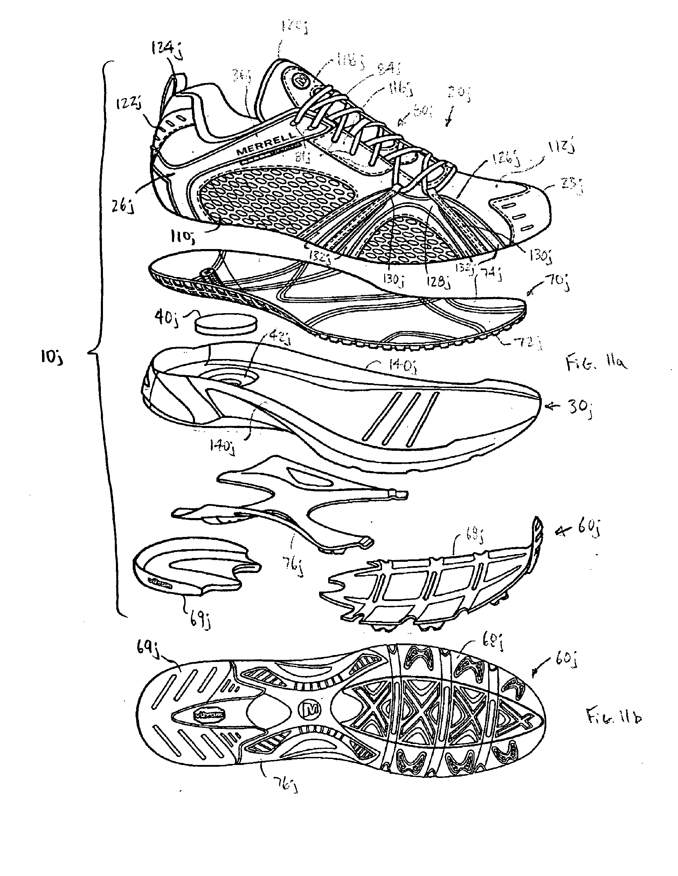

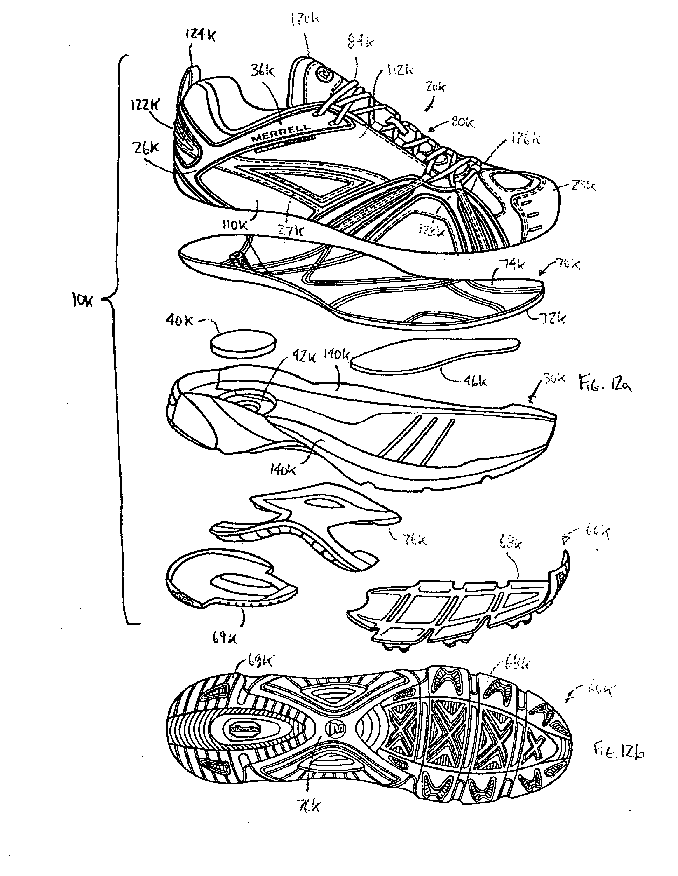

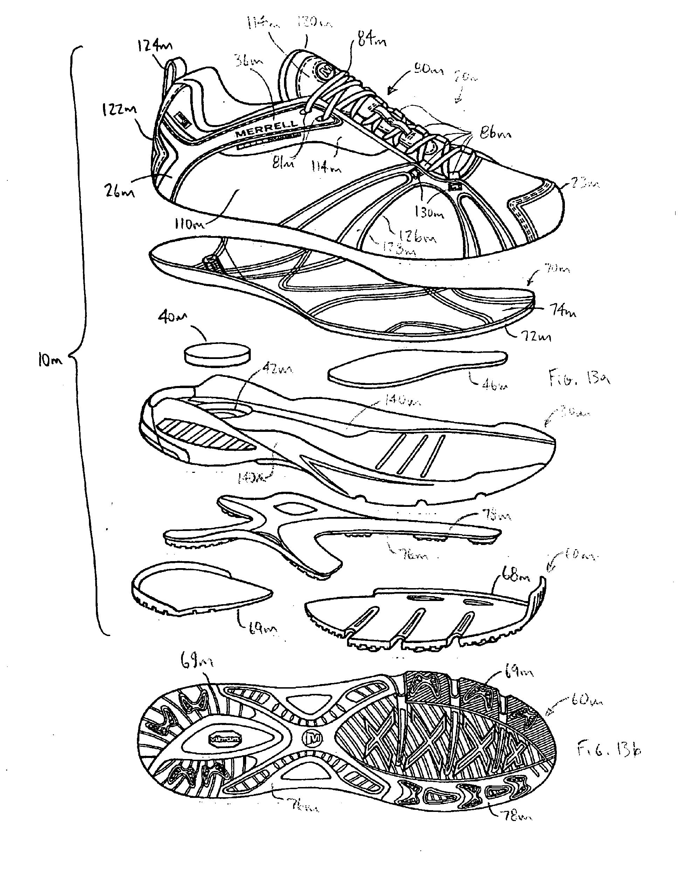

Figs. 8-13 show an alternative line of products, including a light sport sandal (See Fig. 8a), a multisport sandal (See Fig. 9a), a shandal (See Fig. 10a), a light trail running shoe (See Fig. 11a), a trail running shoe (See Fig. 12a) and a high performance trail running shoe (See Fig. 13a). The sport sandal of Fig. 8a is intended for use in light sport activities. In this embodiment, the sport sandal 10g generally includes an outsole 60g, a partial support plate 50g overlying a portion of the outsole 60g, a cushion insert 40g in the heel region, a midsole 30g and an upper 20g (See Fig. 8a). The upper 20g is designed to provide sufficient support for use in various light sporting activities. The sandal upper 20g includes straps 22g configured to overlay the forefoot, ankle and heel of the wearer's foot. The forefoot strap 22g includes a pair of support straps 25g that form an X-shaped interconnection over the forefoot. The use of X-shaped components, such as support straps 25g, over the forefoot are common to all of the products in this line. This not only provides unique functional benefits, but also helps to interconnect the products providing a point of visual evolution. The support straps 25g may be manufactured from synthetic leather, leather or other conventional materials suitable for light sport activity. The forefoot and ankle straps 22g are adjustable in length and are releasable secured by Velcro® or other releasable fasteners, such as plastic clips. A molded piece 27g is stitched or cemented to the synthetic material on opposite sides of the sandal upper 20g to enhance support and provide design appeal. The upper 20g may also include conventional lining materials (not shown), such as neoprene or the like. The lining materials are selected to be suitable for light sport activities. In this embodiment, the support plate 50g extends from a point beginning at or near the toe of the sandal 10g rearwardly through the arch region and terminating at or near the front of the heel region. The support plate 50g may define a plurality of lateral cutouts 51 g that are disposed at a spaced relationship in the forefoot region to improve the longitudinal flexibility of in the forefoot region. The rear end 52g of the support plate 50g may be arcuate to permit proper operation of the heel cushion 40g. The support plate 50g may be manufactured from nylon or other similar materials and preferably has Grade 2 rigidity. The midsole 30g provides the primary cushion for the sole. The midsole 30g may be manufactured from EVA or other similar cushioning materials. The midsole 30g may be manufactured from a single material or may include materials of different properties in different regions. In this embodiment, the midsole defines a plurality of die cut holes 32g for the upper 20g. The straps 22g extend down through the die cut holes 32g and are cemented or otherwise secured to the undersurface of the midsole 30g. The midsole 30g may also include a heel cushion 40g. The heel cushion 40g is disposed in a circular recess (not shown) defined in the undersurface of the midsole 30g. The heel cushion 40g is manufactured from EVA or other similar cushioning materials, and may define a central star-shaped cutout 44g. The outsole 60g of the sport sandal 10g is shown in Fig. 8b and is cemented or otherwise secured to the undersurface of the midsole 30g and support plate 50g. The outsole 60g may be manufactured from rubber or other similar outsole materials. The outsole 60g includes a plurality of X-shaped lugs and a plurality of closely spaced, parallel tread elements on the medial side of the forefoot region and the lateral side of the heel region. A large X-shaped treatment is located in the arch region.

The multisport sandal 10h of Fig. 9a is intended for use in heavier sporting activities than the light sport sandal 10g. The multisport sandal 10h is similar in construction to the light sport sandal 10g except as described below. The multisport sandal 10h generally includes an outsole 60h, a partial support plate 50h overlying a portion of the outsole 60h, a cushion insert 40h in the heel region, a midsole 30h and an upper 20h (See Fig. 9a). The upper 20h is designed to provide a higher level of support than the upper 20g of the light sport sandal 10g. Accordingly, the upper 20h can be manufactured from heavier materials and may be configured to cover more of the wearer's foot. The forefoot strap 22h includes a pair of individual support straps 25h that form an X-shaped interconnection over forefoot. The various straps may be manufactured from synthetic leather, leather or other conventional materials suitable for general sporting activity. As with the sport sandal 10g, the forefoot and ankle straps 22h are adjustable in length and are releasable secured by Velcro® or other releasable fasteners, such as plastic clips. The upper 20h further includes several molded elements 27h that are stitched, cemented or otherwise secured to the synthetic material in the forefoot and ankle regions. The molded elements 27h provide design appeal and enhance the support of the upper 20h. The upper 20h may also include a pair of ankle support components 26h disposed on opposite sides of the ankle. The ankle support components 26h may be manufactured from a polymeric material, such as TPU, that enhances the stability of the upper 20h in the ankle region, thereby improving the performance of the sandal in sport activity. The ankle supports 26h may be stitched or otherwise secured to the upper 20h. The ankle strap 22h is connected between the ankle supports 26h on opposite sides of the sandal 10h so that the ankle strap 22h can be drawn snuggly around the ankle as the strap 22h is tightened. The upper 20h may also include conventional lining materials, such as neoprene, Lycra or the like. The lining materials are selected to be suitable for sport activities. In this embodiment, the midsole not only defines a plurality of die cut holes 32h for receiving the upper, but also defines a pair of shallow recesses 34h in the sidewall to receive the ankle supports 26h. The ankle supports 26h are cemented or otherwise secured in the recesses 34h and also to the undersurface of the midsole 30h. The support plate 50h and heel cushion 40h are generally identical to those of the light sport sandal 10g. If desired, the performance characteristics of one of more of those components can be varied to provide the multisport sandal 10h with more support than the light sport sandal 10g. The outsole 60h of the multisport sandal 10h is shown in Fig. 9b. The outsole includes a plurality of X-shaped lugs and a plurality of closely spaced, parallel tread elements on the medial side of the forefoot region and the lateral side of the heel region. A large X-shaped treatment is located in the arch region. As can be seen, there is a distinct visual evolution from the light sport sandal outsole 60g to the multisport sandal outsole 60h.

The shandal 10i of Fig. 10a is intended for use is moderate sporting activities. The shandal is a hybrid footwear product having an upper 20i with a closed front, similar to a shoe, and an open rear, similar to a sandal. The upper 20i is manufactured from a combination of textile mesh and synthetic leather. A mesh material 110i forms the majority of the front portion of the upper 20i extending along the sides of the upper 20i over the toe region and upwardly through the tongue 120i. The upper 20i includes a synthetic leather material 114i that overlies portions of mesh 110i on both sides of the shandal and wraps around the rear to define a heel strap 100i. A separate piece of synthetic material 114i also wraps around the back of the heel extending upwardly and forwardly to define an adjustable ankle strap 22i. The ankle strap 22i includes a Velcro® strip that permits it to be selectively secured back onto itself to set the desired strap length. The upper 20i also includes a toe guard 23i manufactured from synthetic materials. A molded piece 27i is stitched, cemented or otherwise secured to the synthetic material 114i forming the heel strap 100i on both sides of the upper 20i. The shandal 10i further includes a forefoot saddle 126i having a construction that is essentially identical to the forefoot saddle 126k of the trail running shoe 10k (described below). In addition to the adjustable ankle strap 22i, the shandal 10i includes a lace 84i that runs through lacking lops 86i on the saddle 136i, as well as additional lacing loops 86i extending along the tongue opening 28i. The lace 84i may include a tensioned lace clip 85i to secure the lace 84i at the desired length. The upper 20i further includes a heel pad 102i and a pull loop 124i secured at the rear of the heel strap 100i. The shandal 10i preferably includes a perforated footbed 70i that provides a high degree of air/water flow. The cushioning layer 72i includes a grid-like contour on its undersurface and is perforated in the spaces between the lines of the "grid." The footbed 70i includes a fabric layer 74i secured atop the cushioning layer 72i. The fabric of the fabric layer 74i preferably includes a relatively open weave so that air and water passes freely through the fabric. As with other products, the midsole 30i is manufactured from EVA or other similar cushioning materials. The midsole 30i may be manufactured from a single material or may include materials of different properties in different regions. In this embodiment, the midsole 30i includes regions of firmer material 140i along opposite longitudinal edges of the midsole 30i. The midsole 30i defines a heel cushion recess 42i in its upper surface. The heel cushion 40i may be cemented or otherwise secured to the midsole 30i. The shandal 10i includes a two piece outsole having a forefoot piece 68i and a heel piece 69i (See Fig. 10b). The tread pattern of the shandal outsole 60i is an evolution of the tread pattern of the multisport sandal outsole 60h, including a plurality of X-shaped lugs in the forefoot region, as well as similar design elements in the peripheral lugs of the forefoot region. The depth of the lugs is somewhat greater in the shandal 10i than in the multisport sandal 10h. The shandal 10i also includes a somewhat X-shaped outsole support 76i. The outsole support 76i is molded from nylon, TPU or other similar materials. The material, thickness and shape of the outsole support 76i are selected to provide the desired support. The X-shaped outsole support 76i not only provides lateral and torsional support, but also provides an evolving visual connection with the other products in this line.

The light trail running shoe 10j of Fig. 11a generally includes an upper 20j, a footbed 70j, a midsole 30j, an outsole 60j and an outsole support component 76j. The upper 20j is manufactured from a combination of synthetic materials and textile mesh. The upper 20j may alternatively include other open weave fabrics or ventilated materials that are light weight and permit a high degree of air flow. The upper 20j includes an open mesh 110j extending through a majority of the front of the shoe. In this embodiment, the mesh 110j is laminated together with a grid-like plastic material that provides enhanced support and visual appeal. The upper 20j includes a second mesh 112j that overlays the open mesh 110j. The second mesh 112j may be manufactured with a closer weave than the open mesh 110j. The upper 20j may also include a synthetic leather material for the eyestay 116j and for trim 118j along the tongue 120j. The upper 20j further includes a molded backstay 122j that extends upwardly from the midsole 30j and terminates at a pull loop 124j. The upper 20j also includes a lining material that is selected so as not to significantly reduce air flow through the mesh 110j and 112j. The upper 20j further includes a toe guard 23j that is manufactured from rubber or other similar materials. The toe guard 23j may be stitched, cemented or otherwise attached to the upper 20j. The upper 20j includes an X-shaped forefoot saddle 126j that provides excellent support and flexibility in the forefoot region while also providing a design connection with the remainder of this product line. The forefoot saddle 126j includes two molded components 128j and two pair of straps 130j that extend upwardly along each side of the shoe. The molded components 128j each include four legs 132j that spread out toward the bottom of the upper 20j. The molded components 128j may be stitched or otherwise secured to the upper 20j. The saddle straps 130j overlie the molded components 128j and together form an X-shaped pattern. Each strap 130j terminates in a loop adapted to receive the lace 84j. As a result, the forefoot saddle 126j can by drawn snuggly over the forefoot as the lace 84j is tightened. The upper 20j further includes an ankle support component 26j having a pair of arms 36j that extends from the heel region upwardly through the ankle region on both sides of the shoe 10j. The upper end of each arm 36j defines a pair a lacing eyelets 81j to integrate the ankle support into the lacing system 80j. The ankle support may be molded from TPU or other similar materials. The lacing system 80j includes a lace 84j that passes through the forefoot saddle 126j, a plurality of eyelets 81j formed along the tongue opening 28j and eyelets 81j in the ankle support 26j. This shoe 10j preferably includes a perforated footbed 70j that is essentially identical to the footbed 70i of the shandal 10i. The midsole 30j provides the primary cushion for the shoe. As with other products, the midsole 30j is manufactured from EVA or other similar cushioning materials. The midsole may be manufactured from a single material or may include materials of different properties in different regions. In this embodiment, the midsole includes regions of firmer material 140j along opposite longitudinal edges of the midsole 30j. The midsole 30j defines a heel cushion recess 42j in its upper surface. The heel cushion recess 42j is disposed in the center of the heel region to receive a heel cushion 40j that provides enhanced cushioning and centers the wearer's heel in the heel pocket. The heel cushion 40j may be cemented or otherwise secured to the midsole 30j. The light trail running shoe 10j includes an outsole 60j and outsole support 76j that are essentially identical to the outsole 60i and outsole support 76i of the shandal 10i, and therefore will not be separately described.

The trail running 10k shoe of Fig. 12a is intended for use in more aggressive trail running than the light trail running shoe 10j. The trail running shoe 10k is similar in construction to the light trail running shoe 10j except as described below. The trail running shoe 10k generally includes an upper 20k, footbed 70k, heel cushion 40k, forefoot cushion 46k, midsole 30k, outsole 60k and outsole support 76k. The upper 20k is manufactured from a combination of textile meshes and synthetic leather. A first mesh material 110k forms the majority of the lower portion of the upper 20k. A second mesh 112k forms the majority of the upper portion of the upper 20k, as well as the toe and portions of the tongue 120k. The second 112k mesh may be of a more open weave than the first mesh 110k. The upper 20k includes a synthetic leather material overlying a portion of the first mesh 110k and extending over the forward portion of the toe. A molded piece 27k is stitched, cemented or otherwise secured to the side of the upper 20k on both sides over the synthetic material to enhance support. The trail running shoe 10k further includes a forefoot saddle 126k having a construction that is essentially identical to the forefoot saddle 126j of the light trail running shoe 10j. The molded pieces 128k of the saddle 126k may, however, be manufactured to provide greater support than the light trail running shoe 10j, for example, by using firmer materials or otherwise increasing their size. As with the light trail running shoe 10j, the upper 20k of the trail running shoe 10k further includes an ankle support component 26k having a pair of arms 36k that extends from the heel region upwardly through the ankle region on both sides of the shoe 10k. The upper end of each arm 36k defines a pair of lacing eyelets 81k that receive the lace 84k. The ankle supports 26k may be molded from TPU or other similar materials, and may be designed to provide greater support than the ankle support 26j of the light trail running shoe 10j. The upper 20k further includes a molded backstay 122k that extends upwardly from the midsole and terminates at a pull loop 124k. The footbed 70k includes a fabric layer 74k secured over a cushioning layer 72k. The forefoot region of the footbed 70k defines a recess (not shown) in its undersurface. An EVA cushion 46k is fitted into the recess to provide the footbed 70k with the desired level of support in the forefoot region. The midsole 30k is similar to the midsole 30j of the light trail running shoe 10j, but may have somewhat different contours to receive the outsole 60k and outsole support 76k. The midsole 30k may also be manufactured from a firmer EVA (or other cushioning material) than in the light trail running shoe 10j to provide enhanced support. In this embodiment, the midsole 30k includes regions of firmer material 140k along opposite longitudinal edges of the midsole 30k. As shown, the firmer material 140k extending along the medial side of the midsole 30k extends farther inwardly through the arch and heel regions to provide enhanced support in those regions. As with the light trail running shoe 10j, the trail running shoe 10k includes a two piece outsole having a forefoot piece 68k and a heel piece 69k (See Fig. 12b). The tread pattern of the trail running outsole 60k is quite similar to the tread pattern of the light trail running outsole 60j, including a plurality of X-shaped lugs in the forefoot region. The depth of the lugs is somewhat greater in the trail running shoe 10k than in the light trail running shoe 10j. The trail running shoe 10k also includes a somewhat X-shaped outsole support 76k that is similar in design and configuration to the outsole support 76j of the light trail running shoe 10j. The outsole support 76k is molded from nylon, TPU or other similar materials, and may be designed to provide more support than the outsole support 76j of the light trail running shoe 10j by using firmer materials and/or increasing the shape or size of the support 76j.

The high performance trail running shoe 10m of Fig. 13a is intended for even more aggressive use than the trail running shoe 10k of Fig. 12a. Accordingly, the high performance trail running shoe 10m has a number of performance components that are graded upwardly to provide the highest level of performance. The upper 20m includes a high tech mesh fabric 110m that provides a breathable waterproof upper. For example, the upper may include a Gore Tarsus® membrane laminated to an open weave textile. The upper 20m may include a synthetic leather material 114m as trim along the ankle collar 21m and the tongue 120m. The upper 20m further includes a forefoot saddle 126m having a durable molded frame 128m on each side of the shoe with a pair of lace loops 86m at the top of each molded frame 128m. The molded frame 128m is cemented or otherwise secured to the midsole 30m, but is preferably not attached to the high tech mesh fabric 110m. A pair of short sections of webbing 130m is stitched to the top of each molded frame 128m to form a pair of lacing loops 86m that permit the saddle to be interconnected with the lacing system 80m. The upper 20m further includes a molded backstay 122m that extends upwardly from the midsole 30m and terminates at a pull loop 124m. The upper 20m also includes an ankle support component 26m having a pair of arms 36m that extends from the heel region upwardly through the ankle region on both sides of the shoe. The upper end of each arm 36m defines a pair of lacing eyelets 81m to receive the shoe lace 84m. The ankle support 26m may be molded from TPU or other similar materials, and may be designed to provide even greater support than the ankle support 26k of the trail running shoe 10k. The footbed 70m of this shoe 10m is similar to the footbed 70k of the trail running shoe 10k and includes a fabric layer 74m secured over a cushioning layer 72m. The footbed 70m includes a cut EVA cushion 46m that is fitted into the undersurface of footbed 70m in the forefoot region. The midsole 30m is similar to the midsole 30k of the trail running shoe 10k, but may have somewhat different contours to receive the outsole 60m and outsole support 76m and may be manufactured from a harder EVA that provides enhanced support. The midsole 30m includes regions of firmer material 144m along opposite longitudinal edges of the midsole 30m. Similar to the trail running shoe 10k of Fig. 12a, the firmer material 144m extending along the medial side of the midsole 30m extends farther inwardly through the arch region and heel region to provide enhanced support in those regions. As with the trail running shoe 10k, the high performance trail running shoe 10m includes a two piece outsole having a forefoot piece 68m and a heel piece 69m (See Fig. 13b). The tread pattern of the high performance trail running outsole 10m is quite similar to the tread pattern of the trail running outsole 60k, including a plurality of X-shaped lugs in the forefoot region. The depth of the lugs is somewhat greater in the high performance trail running shoe 10m than in the trail running shoe 10k. The high performance trail running shoe 10m also includes a somewhat X-shaped outsole support 76m that is similar in design and configuration to the outsole support 76k of the trail running shoe 10k. The outsole support 76m in this shoe 10m includes an extended leg 78m that follows along the medial edge of the shoe in the forefoot region. The extended leg 78m provides enhanced support in the medial forefoot region. The outsole support 76m is molded from nylon, TPU or other similar materials, and may be designed to provide more support than the outsole support 76k of the trail running shoe 10k.

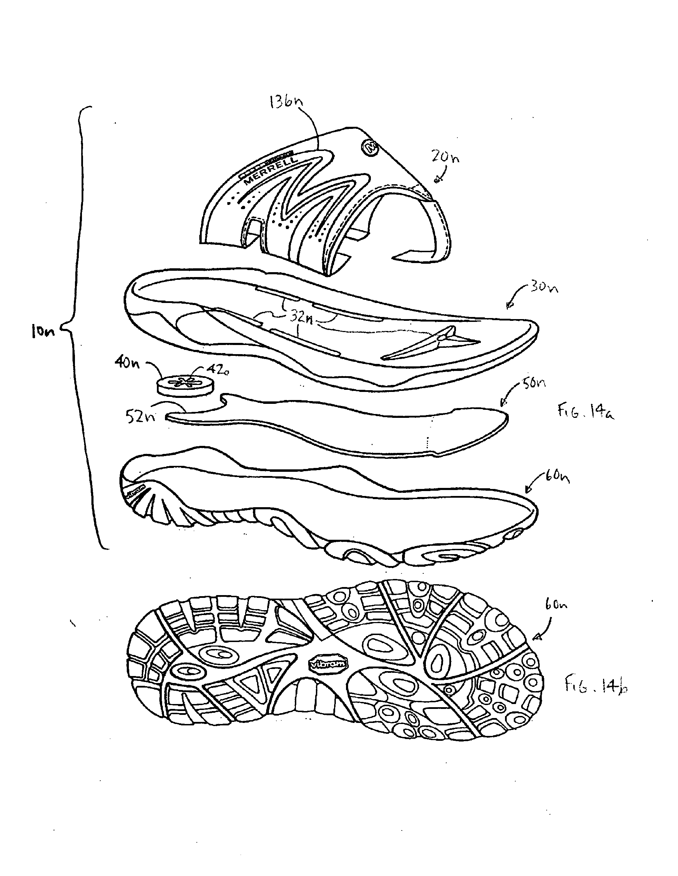

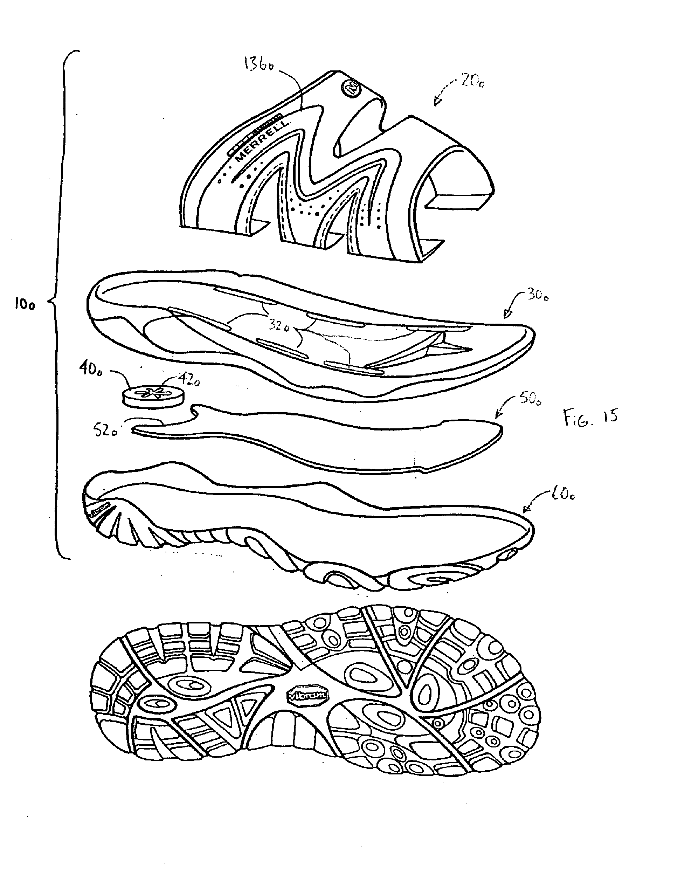

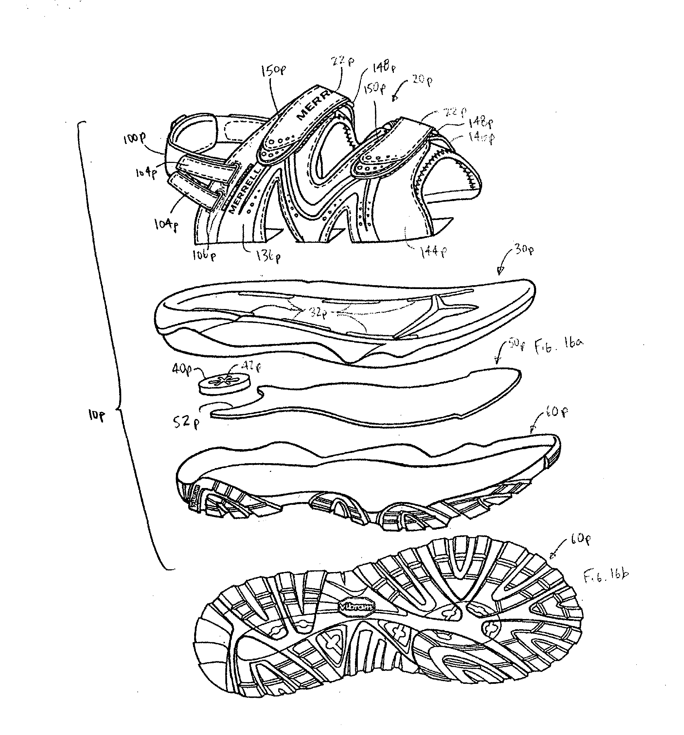

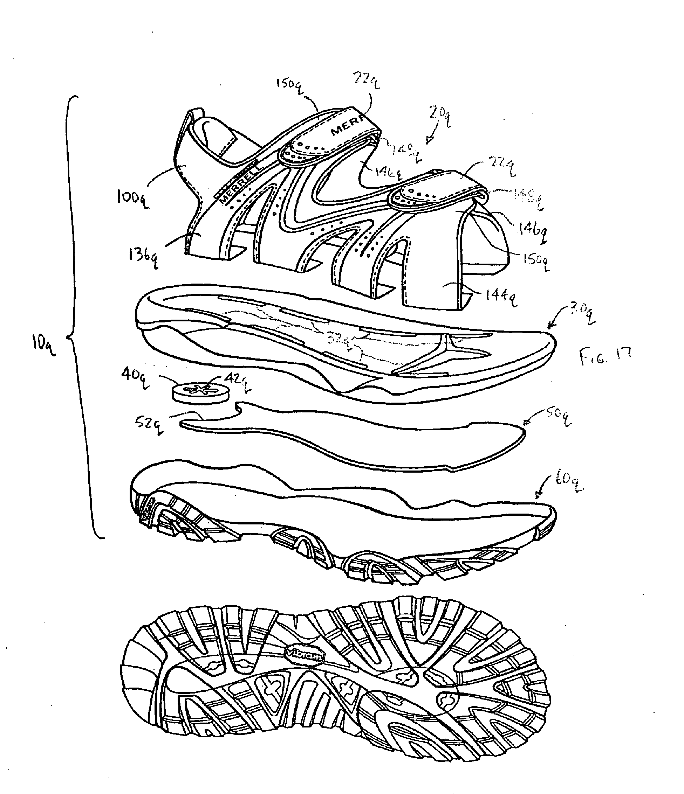

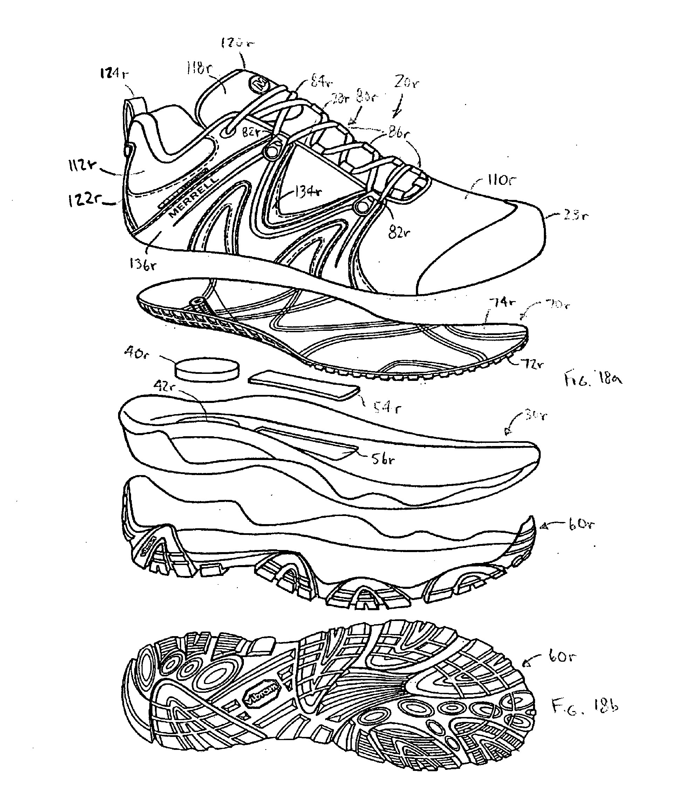

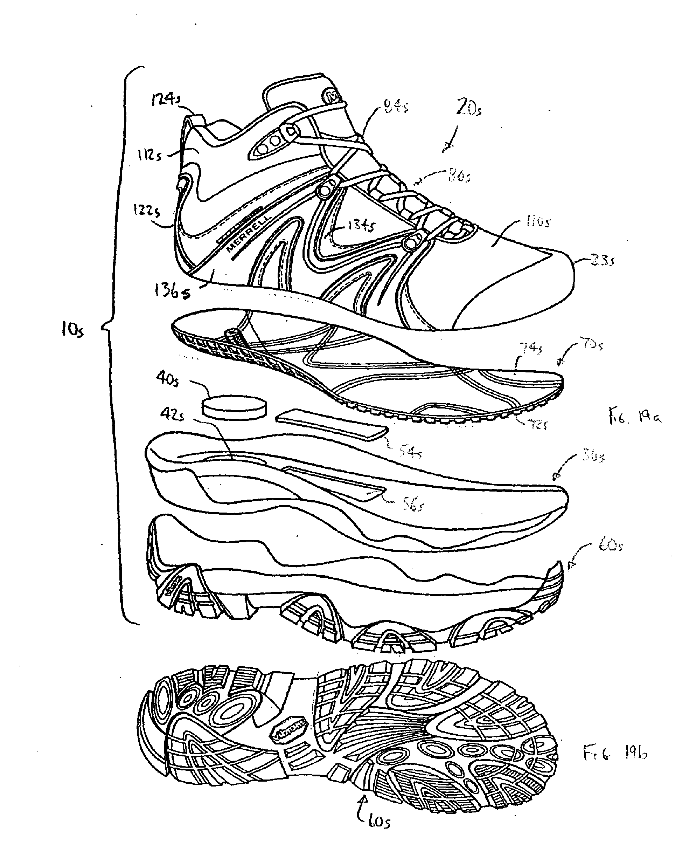

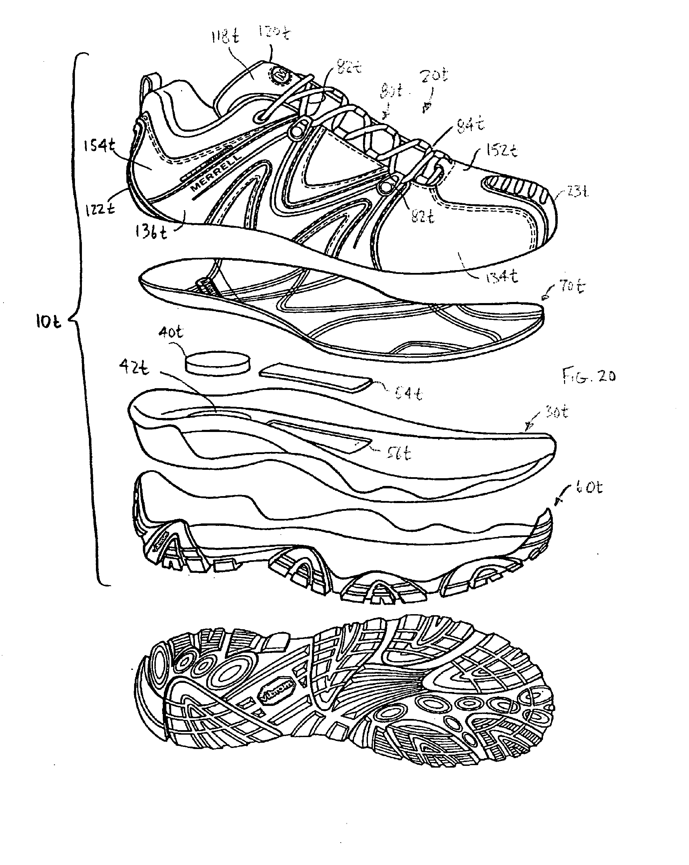

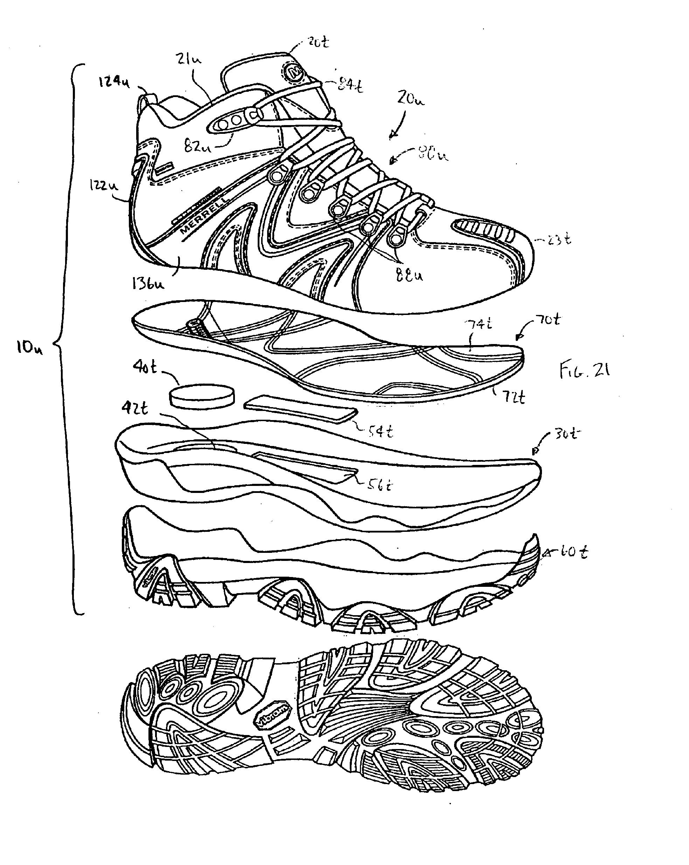

In other embodiments, the functional categories may be somewhat narrower in classification, for example, including multiple sandals, multiple shoes or multiple boots of different performance characteristics. In the alternative embodiment shown in Figs. 14-21, the line of products includes a thong sandal (See Fig. 14a), a slide sandal (See Fig. 15), a convertible sandal (See Fig. 16a), a sport sandal (See Fig. 17), a ventilated trail running shoe (See Fig. 18a), a ventilated day hiking boot (See Fig. 19a), a leather trail running shoe (See Fig. 20) and a waterproof day hiking boot (See Fig. 21). The thong sandal 10n of Fig. 14a is intended for light use and generally includes an upper 20n, a midsole 30n and an outsole 60n. The upper 20n is a generally conventional thong upper manufactured from synthetic materials and including a neoprene lining. A molded "M"-shaped element 136n is stitched, cemented or otherwise secured to opposite sides of the sandal upper 20n. The molded components 136n provide enhanced support to the upper 20n while also provide a unique visual appearance that, as will be evident, morphs or evolves from one product to another in this product line. The midsole 30n is generally conventional being manufactured from EVA or other similar materials. The midsole 30n defines a plurality of through-holes 32n that permit the ends of the upper 20n to pass beneath and be cemented or otherwise secured to the undersurface of the midsole 30n. The midsole 30n also includes a heel cushion 40n. The heel cushion 40n is disposed in a circular recess 42n defined in the undersurface of the midsole 30n. The heel cushion 40n may be manufactured from EVA and may define a central star-shaped cutout 44n. The thong sandal 10n includes a support plate 50n that extends over only a portion of the sole. The rear end 52n of the support plate 50n may be arcuate to permit proper operation of the heel cushion 40n. The support plate 50n may be manufactured from nylon or other similar materials and preferably has Grade 2 rigidity. The outsole 60n is cemented to the undersurface of the midsole 30n and is manufactured from rubber or other similar materials. The trade pattern includes a plurality of lugs arranged in distinctly shaped groupings (See Fig. 14b). In side profile, the outsole extends partially up the midsole with the lugs wrapping upwardly following an undulating line.

The slide sandal 10o of Fig. 15 is intended to provide more support than the thong sandal 10n. The slide sandal 10o generally includes an upper 20o, a midsole30o, a support plate 50o and an outsole 60o. The upper 20o is manufactured from synthetic materials and includes a neoprene lining. The upper 20o includes a pair of molded "M"-shaped elements 136o secured to opposite sides of the upper 20o. The molded elements 136o provide enhanced support to the upper 20o and provide a morphing visual connection with the other products in this line. The midsole 30o is generally conventional being manufactured from EVA or other similar materials. The midsole 30o defines a plurality of through-holes 32o that permit the ends of the upper 20o to pass beneath and be cemented or otherwise secured to the undersurface of the midsole 30o. The midsole 30o also includes a heel cushion 40o that is essentially identical to the heel cushion 40n of the thong sandal 10o. The slide sandal 10o includes a support plate 50o that is essentially identical to the support plate 50n of the thong sandal 10n. The outsole of the slide sandal is identical to the outsole 60n of the thong sandal and is therefore not separately illustrated.

The convertible sandal 10p of Fig. 16a is intended for use in a range of light to moderate sporting activities. The convertible sandal 10p includes a removable heel strap 100p. When the strap 100p is removed, the sandal 10p is most appropriate for use in light sporting activities, but when the strap 100p is attached the sandal 10p is appropriate for moderate sporting activities. Like the slide sandal 10o, the convertible sandal 10p generally includes an upper 20p, a midsole 30p, a support plate 50p and an outsole 60p. The upper 20p is manufactured from synthetic materials and includes a neoprene lining. The upper 20p is similar in construction to the upper of the slide 20o. However, it is substantially heavier in construction extending farther forward and farther rearward to enshroud a larger portion of the wearer's foot. The upper 20p includes adjustable forefoot and ankle straps 22p, as well as the removable heel strap 100p. The upper lining includes a continuous piece of neoprene that extends over the forefoot. The synthetic material, on the other hand, includes separate medial and lateral pieces, 144p and 146p respectively, which are adjustably interconnected over the forefoot. More specifically, the lateral piece 146p may include strap elements 150p that extend over the forefoot through corresponding strap holes 148p defmed in the medial piece and are secured back onto themselves by Velcro® or other releasable fasteners. The upper 20p further includes a pair of molded "M"-shaped elements 136p secured to opposite sides of the upper 20p. The removable heel strap 100p is manufactured from synthetic materials and may includes a neoprene lining as well as a cushioning element 102p to engage the back of the heel. Opposite ends of the heel strap define a pair of Velcro®-lined ministraps 104p that can be fed through corresponding holes 106p defined in the upper 20p and secured back onto themselves to releasably secure the heel strap 100p to the upper 20p. The midsole 30p is generally conventional being manufactured from EVA or other similar materials. The midsole 30p defines a plurality of through-holes 32p that permit the ends of the upper 20p to pass beneath and be cemented or otherwise secured to the undersurface of the midsole. The midsole 30p also includes a heel cushion 40p that is fitted into a recess 42p in the midsole 30p. The convertible sandal 10p includes a support plate 50p that is similar in design and construction to the support plate 50o of the slide sandal 10o. If desired, the support plate 50p may be manufactured from more rigid materials than used for the support plate 50o of the slide sandal 10o. The outsole 60p of the convertible sandal 10p is shown in Fig. 16b. As shown, the tread pattern is an evolution of the tread pattern of the slide sandal outsole 60o. The lugs and lug groupings have become sharper with less curves and primarily squared corners. The side profile of this outsole 60p is similar to the side profile of the slide sandal outsole 60o. However, it also represents an evolution from the slide sandal outsole 60o and again includes sharper, squarer elements. The outsole 60p is cemented or otherwise secured to the undersurface of the midsole 30p and support plate 50p in a conventional manner.

The sport sandal 10q is intended for use in a variety of sporting activities. The sport sandal 10q generally includes an upper 20q, a midsole 30q, a partial support plate 50q, a cushion insert 40q in the heel region and an outsole 60q (See Fig. 17). The sport sandal upper 20q is manufactured from synthetic materials and includes a series of straps 22q configured to overlay the forefoot and the ankle and to pass around the heel. The upper extends farther forward and rearward on the sole than the upper 20p of the convertible sandal 10p. Accordingly, the upper 20q has the ability to entrap a larger portion of the wearer's foot and provide greater support. As with the convertible sandal 10p, the sport sandal 10q includes an upper 20q having a medial piece 144q and a lateral piece 146q. The lateral piece 146q includes a pair of strap elements 150q that pass over the forefoot and are fed through corresponding strap eyelets 148q on the medial piece 144q. The strap elements 150q are lined with Velcro® and are folded back onto themselves to secure them at the desired length. The forefoot and ankle straps 150q may alternatively be secured by other conventional hardware, such as plastic clips. Unlike the convertible sandal 10p, the heel strap 100q of the sport sandal 10q is an integral part of the upper 20q. The upper 20q further includes a pair of molded "M"-shaped elements 136q secured to opposite sides of the upper 20q to enhance support and provide a visual connection with the other products in this line. The upper 20q may also include conventional lining materials, such as neoprene, Lycra or the like. The lining materials are selected to be suitable for sporting activities. In this embodiment, the midsole 30q, heel cushion 40q, support plate 50q and outsole 60q are essentially identical to those of the convertible sandal 10p. Accordingly, they will not be described in detail. It should be noted, however, that these components can be graded to provide enhanced support, for example, by using harder and more durable materials.

The ventilated trail running shoe 10r of Fig. 18a is intended for use in trail running in dry environments. The trail running shoe 10r generally includes an upper 20r, a footbed 70r, a midsole 30r and an outsole 60r. The upper 20r is manufactured from a combination of synthetic materials and textile mesh. The upper 20r may alternatively include other open weave fabrics or ventilated materials that are light weight and permit a high degree of air flow. The upper 20r includes a first mesh material 110r extending through a majority of the vamp and the tongue 120r and a second mesh 112r extending around the heel of the shoe 10r. The upper 20r also includes synthetic material forming a toe guard 23r, tongue trim 118r and somewhat "M"-shaped pieces 134r on each side of the shoe 10r. The synthetic material is stitched, cemented or otherwise secured to the underlying mesh. The upper 20r further includes a molded backstay 122r that extends upwardly from the midsole 30r and terminates at a pull loop 124r. The backstay 122r is stitched, cemented or otherwise secured to the underlying mesh. The upper 20r also includes a lining material that is selected so as not to significantly reduce air flow through the mesh 110r and 112r. The upper also include a pair of molded "M"-shaped saddle elements 136r that are disposed on opposite sides of the shoe overlying the "M"-shaped synthetic pieces 134r. The molded components 136r may be molded from TPU or other similar materials and are stitched or otherwise secured to the upper 20r in a conventional manner. Each molded component 136r includes a lacing hook 82r at the top of each peak in the "M" to receive the lace 84r. As a result, the saddle 136r can by drawn snuggly around the forefoot as the lace 84r is tightened. The saddle 136r provides excellent support while retaining flexibility in the forefoot region. At the same time, the molded components 136r provide a design connection with the remainder of the product line. The lacing system 80r includes a lace 84r that passes through the forefoot saddle 136r, a plurality of lacing loops 86r formed along the tongue opening 28r and eyelets 81r defined at the top of tongue opening 28r. The ventilated trail running shoe 10r preferably includes a perforated footbed 70r that provides a high degree of air/water flow. The cushioning layer 72r includes a grid-like contour on its undersurface and is perforated in the spaces between the lines of the "grid." The footbed 70r includes a fabric layer 74r secured atop a cushioning layer 72r. The fabric layer 74r preferably includes a relatively open weave fabric so that air and water passes freely through the fabric layer 74r. The midsole 30r is manufactured from EVA or other similar cushioning materials. The midsole 30r may be manufactured from a single material or may include materials of different properties in different regions. The midsole 30r defines a shank recess 56r and heel cushion recess 42r in its upper surface. The shank recess 56r is disposed in the arch region to receive a shank 54r that provides the desired stability to the arch of the wearer's foot. The properties, such as size, shape and materials, of the shank 54r may vary from one application to another. The heel cushion recess 42r is disposed in the center of the heel region of the sole to receive a heel cushion 40r. The shank 54r and heel cushion 40r may be cemented or otherwise secured to the midsole 30r. The outsole 60r of the trail running shoe 10r is shown in Fig. 18b. As shown, the tread pattern is an evolution of the tread pattern of the sport sandal outsole 60q. Overall, the outsoles 60r and 60q share a very similar appearance, but certain lugs and lug groupings have been morphed or eliminated to provide a distinct evolution from one sole to the other. The depth of the lugs has also been increased in this outsole 60r and a more distinct heel 64r has been introduced. The side profile of this outsole 60r remains quite similar to the side profile of the sport sandal outsole 60q. However, it also represents an evolution in that it is configured to provide a more exaggerated appearance than the sport sandal outsole 60q. As with the other products in this line, the outsole 60r is cemented or otherwise secured to the undersurface of the midsole 30r in a conventional manner.

The ventilated day hiking boot 10s of Fig. 19a is intended for use in light hiking activity in dry environments. The ventilated day hiking boot 10s is similar to the ventilated trail running shoe 10r having an upper 20s formed primarily of mesh materials. The upper 20s of the day hiking boot 10s includes a substantially higher collar 21s than the ventilated trail running shoe 10r, thereby providing enhanced ankle support. The footbed 70s and midsole 30s are essentially identical to the footbed 70r and midsole 30r of the ventilated trail running shoe 10r, except that the cushioning properties of the footbed and midsole may be varied to provide enhanced support, if desired. The outsole 60s of the ventilated day hiking boot 10s is similar to that of the ventilated running shoe 10r. The outsole 60s includes essentially the same tread pattern (See Fig. 19b), but the lug depth may be increased and a more pronounced heel 64s may be introduced in the day hiking boot 10s. Additionally, the materials of the outsole 60s may be varied to provide enhanced durability. As with all other outsoles, the outsole 60s of the day hiking boot 10s may include different materials in different regions to provide tailored control over the traction and durability of the outsole 60s.

The leather trail running shoe 10t of Fig. 20 is generally identical to the ventilated trail running shoe 10r of Fig. 18a except as described below. The upper 20t of this trail running shoe 10t is manufactured primarily from leather. The upper 20t (including the tongue 120t) is formed from a first leather material 152t. A second leather material 154t forms substantial side pieces 134t that extend along opposite sides of the upper 20t, as well as trim 118t at the top of the tongue 120t. The side pieces 134t extend from heel to toe and are generally "M"-shaped in a central region. The side pieces 134t and tongue trim 118t are stitched or otherwise secured to the underlying first leather material 152t. The upper 20t also include a pair of molded "M"-shaped saddle elements 136t that are disposed on opposite sides of the shoe overlying the "M"-shaped central portions of the underlying leather side pieces 134t. The molded components 136t may be molded from TPU or other similar materials and are stitched or otherwise secured to the upper 20t in a conventional manner. Each molded component 136t includes a lacing hook 82t at the top of each peak in the "M" to receive the lace 84t. The upper 20t also includes a molded backstay 122t and a molded toe guard 23t. The leather trail running shoe preferably includes a non-perforated footbed 70t. The lacing system 80t, midsole 30t and outsole 60t are essentially identical to those in the ventilated trail running shoe 10r of Fig. 18.

The waterproof day hiking boot 10u of Fig. 21 is essentially a waterproof, mid-height version of the leather trail running shoe of Fig. 19a. The upper 20u is manufactured in primarily the same manner as the leather trail running shoe 10t, except that it includes an extended, mid-height collar 21u. The upper 20u is manufactured from leather pieces having largely the same cut and design as the upper 20t of the leather trail running shoe, except that they are extended to provide the higher ankle collar 21u. Unlike the leather trail running shoe 10t, however, the upper 20u of the waterproof day hiking boot 10u is lined with a waterproof membrane. The lacing system 80u includes a plurality of lacing rings 88u that are riveted to the upper 20u along opposite sides of the tongue opening 28u and a pair of lacing hooks 82u that are double-riveted to the upper 20u near the top of the ankle collar 21u. The upper 20u also includes a molded backstay 122u and molded toe guard 23u. The footbed 70u and midsole 30u are essentially identical to the footbed 70t and midsole 30t of the leather trail running shoe 10t, except that the cushioning properties of the components may be varied to provide enhanced support, if desired. The outsole 60u of the waterproof day hiking boot 10u is identical to that of the ventilated day hiking boot 10s.

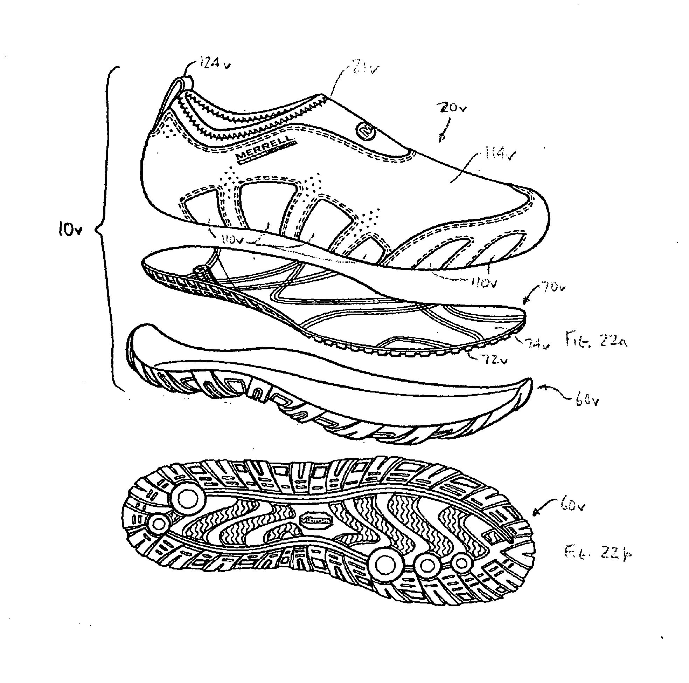

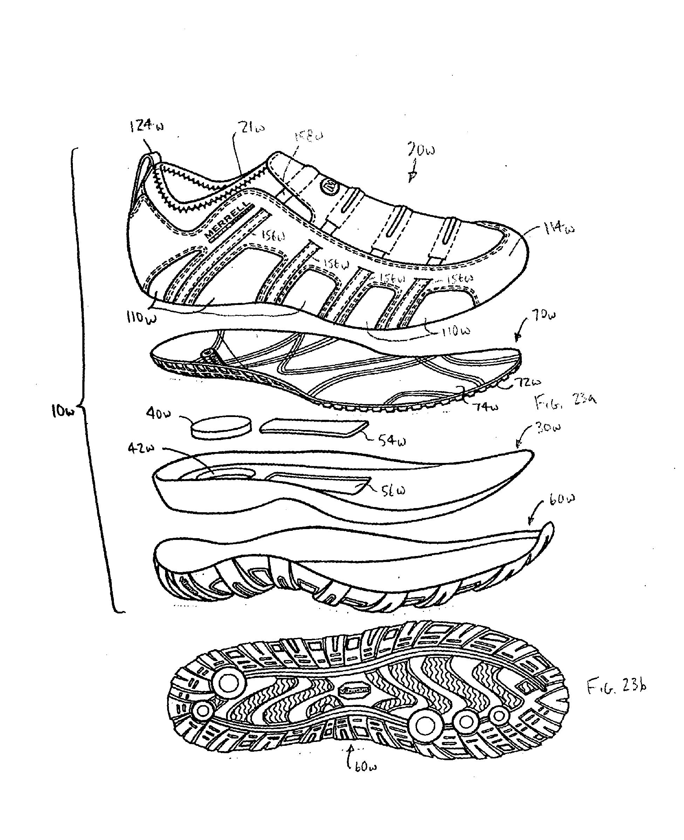

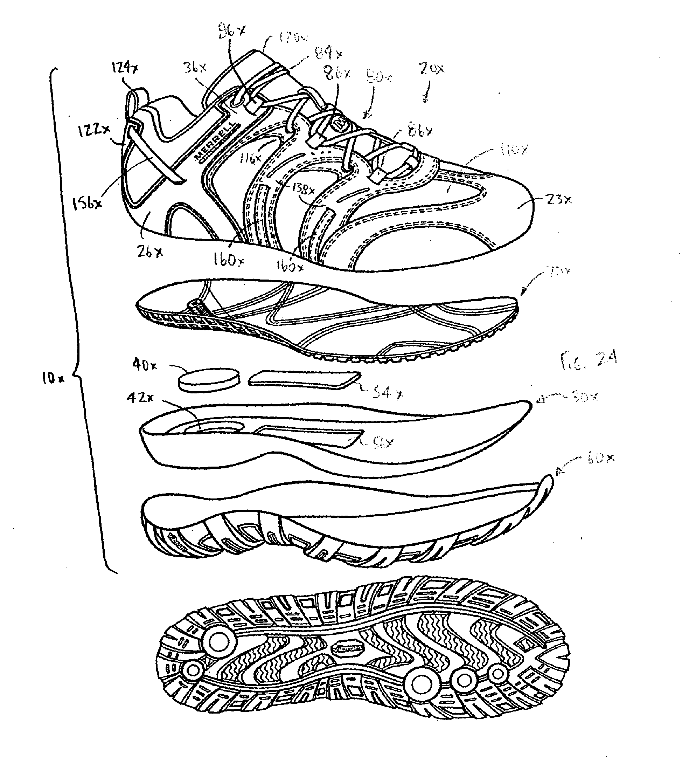

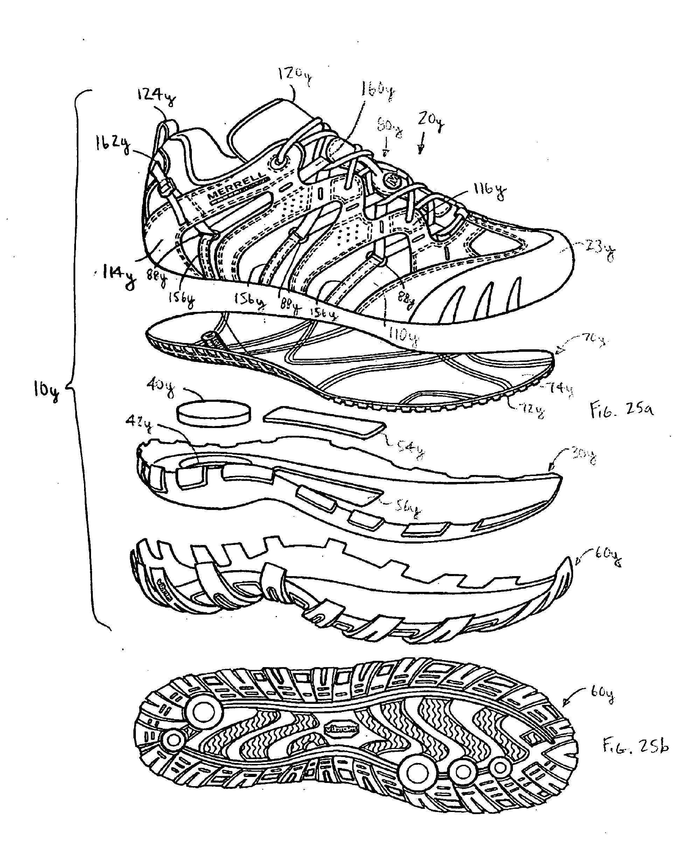

A line of water-friendly products designed in accordance with an embodiment of the present invention is shown in Figs. 22-25. This line of products includes a water sock (See Fig. 22a), a water moc (See Fig. 23a), a multisport water shoe (See Fig. 24) and a high performance water shoe (See Fig. 25a). This product line in intended for use in wet environments and is designed to permit water to flow in and out of the shoes. The water sock 10v of Fig. 22a generally includes an upper 20v, a footbed 70v and an outsole 60v, and is manufactured using a conventional stroble construction. The upper 20v is manufactured from a combination of synthetic material, mesh and neoprene. The majority of the upper (including the toe guard) is manufactured from synthetic material 114v with a plurality of mesh panels 110v arranged along the base of the upper 20v and with neoprene extending around the ankle collar 21v and down along the top of the forefoot. The upper 20v further includes a webbing pull loop 124v at the back of the heel. The bottom of the upper 20v is closed by a conventional stroble construction. The footbed 70v is fitted within the upper 20v to enhance comfort. The footbed 70v is preferably a perforated footbed and includes a lining material 74v secured to the upper surface of a cushioning material 72v, such as closed-cell foam. The undersurface of the cushioning material 72v may include a grid-like contour and the cushioning material may define perforations in the spaces between the lines in the grid. The outsole 60v is cemented or otherwise secured to the undersurface of the upper 20v. The outsole 60v includes a plurality of wavy treads contained within a pattern of radially extending peripheral lugs (See Fig. 22b). The outsole 60v also includes three circular lugs of differing size in the forefoot and two circular lugs of differing size in the heel region.

The water moc 10w of Fig. 23a is designed for a higher level of performance than the water sock 10v. The water moc 10w generally includes an upper 20w, a footbed 70w, a midsole 30w and an outsole 60w. The upper 20w is manufactured from a combination of synthetic material, mesh and neoprene. As with the water sock 10v, the majority of the upper 20w is synthetic material 114w with mesh panels 110w arranged along the bottom of the upper 20w and with neoprene extending around the collar 21w and into the tongue region. A plurality of sections of webbing 156w extends upwardly from the outsole 60w along the side of the upper 20w. The rearmost section of webbing 156w appears to extend fully across the shoe running from the outsole on one side over the tongue and down to the outsole on the other side. But, it does not. Instead, short segments of elastic material 158w having roughly the same visual appearance as the webbing 156w are stitched onto the visible neoprene portions. These elastic segments stretch to make it easier to put the shoe on and take it off. The remaining sections of webbing 156w actually extend entirely over the shoe. The upper 20w further includes a webbing pull loop 124w at the back of the heel. The water moc 10w includes a footbed 70w that is essentially identical to the footbed 70v of the water sock 10v. However, a thicker and/or firmer cushioning material may be selected for the footbed 70w of the water moc 10w than was selected for the water soc footbed 70v. The water moc 10w includes an internal midsole 30w. Accordingly, the peripheral marginal allowance of the upper 20w is wrapped beneath and cemented or otherwise secured to the undersurface of the midsole 30w. The midsole 30w is manufactured from EVA or other similar cushioning materials. In this embodiment, the midsole 30w defines a shank recess 56w and heel cushion recess 42w in its upper surface. A shank 54w is fitted into the shank recess 56. The properties of the shank may vary from one application to another. A heel cushion 40w is fitted into the heel cushion recess 42w. The shank 56w and heel cushion 40w may be cemented or otherwise secured to the midsole 30w. The outsole 60w is cemented or otherwise secured to the undersurface of the upper/midsole. The outsole 60w includes essentially the same tread pattern as the water sock 10v (Fig. 23b). Because the water moc 10w includes an internal midsole 30w, the outsole 60w wraps farther up the upper 20w than the outsole 60v of the water sock 10v.

The multisport water shoe 10x of Fig. 24 is intended for use in more aggressive activity than the water moc 10w. Like the water moc 10w, the multisport water shoe 10x generally includes an upper 20x, a footbed 70x, a midsole 30x and an outsole 60x. Unlike the water moc 10w, the upper 20x of the multisport water shoe 10x includes a conventional tongue 120x and lacing system 80x. The upper 20x is manufactured from a combination of synthetic materials and mesh. The majority of the upper is mesh 110x with synthetic material forming the eyestay 116x, toe guard 23x, a plurality of pieces 138x that extend along the side of the upper 20x to shepherd corresponding sections of webbing 160x. The webbing sections 160x extend upwardly from the outsole 60x to define lacing loops 86x that receive the shoe lace 84x. The webbing sections 160x may weave above and below the synthetic material. The upper 20x also includes an ankle/heel support 26x having a pair of arms 36x that extend along opposite sides of the upper 20x and an integral backstay 122x. The ankle/heel support 26x is preferably molded from TPU or other similar materials and is stitched, cemented or otherwise attached to the upper 20x. The TPU formulation may vary from application to application, but is preferably firm enough to provide good ankle support, but soft enough to permit the support 26x to be sewn to the upper 20x without cracking. The rearmost section of webbing 156x is laced through the ankle/heel support 26x and extends entirely around the heel of the shoe so that its opposite ends form lacing loops 86x on opposite sides of the shoe 10x. As a result, the arms 36x and backstay 122x of the ankle/heel support are drawn snuggly around the wearer's foot as the lace 84x is tightened. The multisport water shoe 10x includes a perforated footbed 70x that is essentially identical to the footbed 70w of the water moc. However, a thicker and/or firmer cushioning material may be selected for the footbed 70x of the multisport water shoe 10x than was selected for the water moc footbed 70w. The multisport water shoe 10x includes an internal midsole 30x that is similar to the internal midsole 30w of the water moc 10w. The midsole 30x is manufactured from EVA or other similar cushioning materials, and may be manufactured from a single material or may include materials of different properties in different regions. The midsole 30x includes a shank 54x and a heel cushion 40x, the characteristics of which may be varied to provide the desired level of support. The outsole 60x of the multisport water shoe 10x is identical to the outsole 60w of the water moc 10w and it is cemented or otherwise secured to the upper/midsole in a conventional manner.

The high performance water shoe 10y of Fig. 25a is intended for use in high demand sporting activities, and is intended to provide an even higher level of performance than the multisport water shoe 10x. The high performance water shoe 10y generally includes an upper 20y, a footbed 70y, a midsole 30y and an outsole 60y. As with the water soc 10v, the high performance water shoe 10y includes a standard stroble construction. The high performance water shoe 10y includes a tongue 120y and a lacing system 80y that incorporates an adjustable length webbing 160y that zigzags around the upper 20y as described in more detail below. The upper 20y is manufactured from a combination of synthetic materials and mesh. The majority of the upper is mesh 110y with synthetic material forming a overlaying piece 114y extending along the sides of the quarter to define an eyestay 116y and shepherd the webbing 160y of the lacing system 80y around the shoe 10y. The synthetic material also extends over the toe 23y and sections of the tongue 118y. The upper 20y further includes a plurality of webbing sections 156y that extend upwardly from the midsole 30y and terminate in a lacing ring 88y partially up the upper 20y. These lacing rings 88y function as lacing components through which the webbing 160y of the lacing system 80y can be threaded. The upper 20y includes a molded toe guard 23y and a molded backstay 122y that extends upwardly from the midsole. The backstay 122y defines a tunnel 162y that permits the webbing 160y of the lacing system 80y to pass around the heel of the shoe. A pull loop 124y is secured to and extends upwardly from the backstay 122y. The backstay 122y is preferably molded from TPU or other similar materials and is stitched, cemented or otherwise attached to the upper 20y. The webbing 160y of the lacing system 80y begins at the toe on one side of the shoe and zigzags along the side of the shoe passing from the lace 84y down to a lacing ring 88y and then back up to the lace 84y in a repetitive manner until reaching the rearmost lacing ring 88y. At that point, the webbing 160y extends around the heel of the shoe 10y passing through the tunnel 162y in the backstay 122y. The webbing 160y then extends forwardly in a zigzag pattern along the opposite side of the shoe 10y passing from the lacing ring 88y to the lace 84y and then down to the next lacing ring 88y in a repetitive manner until reaching the toe. The high performance water shoe 10y includes a perforated footbed 70y that is essentially the same as the perforated footbed 70x of the multisport water shoe 10x, except that it may include a thicker and/or firmer cushioning material. The multisport water shoe 10y includes an external midsole 30y that is similar to the external midsole 30v of the water sock 10v. The midsole 30y is manufactured from EVA or other similar cushioning materials, and may be manufactured from a single material or may include materials of different properties in different regions. The midsole 30y includes a shank 54y and a heel cushion 40y, the characteristics of which may be varied to provide the desired level of support. The outsole 60y of the high performance water shoe 10y includes essentially the same tread pattern as the outsoles in the other products in this line (See Fig. 25b). However, the peripheral lugs protrude upwardly from the remainder of the outsole 60y to define a plurality of fingers 164 that overlay the midsole 30y. The outsole 60y is cemented to the midsole 30y in a conventional manner.

The foregoing descriptions provide an illustration of morphing functional and design components in accordance with an embodiment of the present invention. They are not, however, intended to provide limitations on the type or style of performance and design components that may evolve from one product to the next. Further, the illustrations are not intended to place limits on the degree of evolution or the number of evolving components that may exist from one product to another.

The above description is that of preferred embodiments of the invention. Various alterations and changes can be made without departing from the spirit and broader aspects of the invention as defined in the appended claims, which are to be interpreted in accordance with the principles of patent law including the doctrine of equivalents. Any reference to claim elements in the singular, for example, using the articles "a," "an," "the" or "said," is not to be construed as limiting the element to the singular.

The embodiments of the invention in which an exclusive property or privilege is claimed are defined as follows:

## Claims

1. A method for designing a line of footwear products in distinct functional categories, comprising the steps of:
designing a first footwear product in a first functional category, the product including a plurality of performance components selected to be appropriate to the first functional category and at least one distinctive aesthetic component;
selecting a plurality of the performance components and at least one aesthetic component of the first footwear product;
designing a second footwear product in a second functional category by varying the characteristics of the select performance components to be appropriate to the second functional category while generally retaining the aesthetic component of the first footwear product to provide a visual connection between the first footwear product and the second footwear product;
selecting a plurality of performance components and at least one aesthetic component of the second footwear product; and
designing a third footwear product in a third functional category by varying the characteristics of the performance components selected from the second footwear product to be appropriate to the third functional category while generally retaining the aesthetic component of the second footwear product to provide a visual connection between the second footwear product and the third footwear product.

2. The method of claim 1 wherein each of said selecting steps is further defined as selecting at least three performance components.

3. The method of claim 2 wherein the performance components include at least one of an upper, a footbed, a midsole, a lacing system, a support plate and a support component.

4. The method of claim 2 wherein at least one of the performance criteria is an upper, the designing step being further defined as varying at least one of a height of the upper and the materials of the upper, or wherein at least one of the performance criteria is a midsole, the designing step being further defined as varying at least one of the materials, location and shape of the midsole, or wherein at least one of the performance criteria is a support plate, the designing step being further defined as varying at least one of the materials, location and shape of the support plate, or wherein at least one of the performance criteria is an outsole, the designing step being further defined as varying at least one of the materials, tread pattern, lug depth, lug shape and heel configuration of the outsole, or wherein at least one of the performance criteria is a lacing system, the designing step being further defined as varying at least one of the lace shape, lace materials, lacing hardware and lacing hardware attachment of the lacing system, or wherein at least one of the performance criteria is a footbed, the designing step being further defined as varying at least one of a lining material, a cushioning material and a shape of the footbed.

5. The method of claim 2 wherein the at least one aesthetic component includes at least one of an upper shape, an upper materials, an upper support component, a midsole shape, a midsole support component, an outsole shape, an outsole tread pattern, an outsole support component and a lacing system.

6. The method of claim 1 wherein each of said designing steps is further defined as evolving the aesthetic component from the first footwear product to the second footwear product and from the second footwear product to the third footwear product to provide a visual indication of a performance level of the correspondence footwear product and preferably wherein said evolving step includes increasing a size of the aesthetic component to provide an indication of an increased performance level and preferably wherein the aesthetic component is the outsole, said evolving step including increasing a lug depth to provide an indication of an increased performance level and preferably wherein the aesthetic component is the outsole, said evolving step including increasing a severity of a geometry in a tread pattern to provide an indication of an increased performance level.

7. The method of claim 1 further comprising the step of varying the color pattern of the first footwear product, the second footwear product and the third footwear product and preferably further comprising the step of providing the first footwear product, the second footwear product and the third footwear product in a plurality of different colorways, the color patterns within each of the colorways being coordinated with one another.

8. A method for designing a line of footwear products across different functional categories, comprising the steps of:
designing a first footwear product for a first functional category, the first footwear product including a plurality of performance components adapted for use in the first functional category and design components to provide a visual appearance;
designing a second footwear product for a second functional category different from the first functional category, the second footwear product including a plurality of performance components adapted for use in the second functional category and design components to provide a visual appearance, the performance components of the second footwear product being an evolution of the performance components of the first footwear product, the design components of the second footwear product being an evolution of the design components of the first footwear product; and
designing a third footwear product for a third functional category different from the first functional category and the second functional category, the third footwear product including a plurality of performance components adapted for use in the third functional category and design components to provide a visual appearance, the performance components of the third footwear product being an evolution of the performance components of the second footwear product, the design components of the third footwear product being an evolution of the design components of the second footwear product, wherein the performance components and the design components of the first footwear product, the second footwear product and the third footwear product provide an evolving, morphing performance and design progression.

9. The method of claim 8 wherein the performance components include at least one of an upper, a footbed, a midsole, a lacing system, a support plate and a support component, or wherein the performance components include at least three of an upper, a footbed, a midsole, a lacing system, a support plate and a support component, or wherein the performance components include an upper, the upper being increased in height as the products increase in performance level and preferably wherein the performance components include an outsole, the outsole having a tread pattern that is increased in lug depth as the products increase in performance level, or wherein the performance components include an upper support component, the upper support component having increased support characteristics as the products increase in performance level, or wherein the performance components include at least three of an upper height, an upper material, an upper shape, an upper support component, a midsole material, a midsole shape, a heel counter shape, a heel counter material, a support plate shape, a support plate material, a footbed cushioning material, a footbed lining material, an outsole shape, an outsole tread pattern, an outsole material, an outsole support component shape and an outsole component material and preferably wherein the design components include at least one of an upper piece shape, an upper material, an upper support component shape, a midsole shape, a heel counter shape, a footbed lining material, an outsole shape, an outsole tread pattern, an outsole support component shape.

10. A line of footwear products comprising:
a first footwear product intended for use in a first functional category, said first footwear product having an aesthetic appearance and at least three performance components;
a second footwear product intended for use in a second functional category, said second footwear product including at least three performance components corresponding to said at least three performance components of said first footwear product, wherein said at least three performance components of said second footwear product are varied from said at least three performance components of said first footwear product to correspond with said second functional category, said second footwear product having an aesthetic appearance that is varied from but distinctly similar to said aesthetic appearance of said first footwear product, whereby said first footwear product and said second footwear product are visually interconnected;
a third footwear product intended for use in a third functional category, said third footwear product including at least three performance components corresponding to said at least three performance components of said first footwear product, wherein said at least three performance components of said third footwear product are varied from said at least three performance components of said first footwear product to correspond with said third functional category, said third footwear product having an aesthetic appearance that is varied from but distinctly similar to said aesthetic appearance of said second footwear product, whereby said first footwear product, said second footwear product and said third footwear products are visually interconnected to provide an appearance of morphing from one footwear product to the next.

11. A method of marketing footwear comprising the steps of:
designing a line of footwear products wherein the products includes at least three products in different functional categories, each of the functional categories having a different performance level, the products each including a plurality of functional components that evolve from one functional category to the next functional category, the products each including a plurality of design components that evolve from one functional category to the next; and
marketing the products as a related line of products.
